# EUROPÄISCHE PATENTSCHRIFT

(11) **EP 3 864 308 B1**
(45) Veröffentlichungstag und Bekanntmachung des Hinweises auf die Patenterteilung: **26.01.2022**
(21) Anmeldenummer: 19786540.5
(22) Anmeldetag: 08.10.2019
(51) Int. Cl.: F16C 17/24, F16C 29/00, F16C 29/02, F16C 41/00

(54) **VORRICHTUNG UND VERFAHREN ZUM BESTIMMEN DER LAGE UND/ODER DER POSITION EINER WALZE IN EINEM WALZGERÜST**
DEVICE AND METHOD FOR DETERMINING THE LOCATION AND/OR POSITION OF A ROLLER IN A ROLLER FRAME
DISPOSITIF ET PROCÉDÉ POUR DÉTERMINER LA POSITION ET/OU L'EMPLACEMENT D'UN CYLINDRE DANS UNE CAGE DE LAMINOIR

(30) Priorität: 08.10.2018 DE 102018217131
(43) Veröffentlichungstag der Anmeldung: 18.08.2021
(73) Patentinhaber: SMS Group GmbH, 40237 Düsseldorf (DE)
(72) Erfinder: HASCHKE, Thomas, 57319 Bad Berleburg (DE); MÜLLER, Torsten, 57223 Kreuztal (DE); ALKEN, Johannes, 57076 Siegen (DE); HUGE, Thorsten, 57223 Kreuztal (DE); KIPPING, Matthias, 57562 Herdorf (DE)
(74) Vertreter: Kross, Ulrich
(86) Internationale Anmeldenummer: PCT/EP2019/077233
(87) Internationale Veröffentlichungsnummer: WO 2020/074520

(56) Entgegenhaltungen:
- WO-A2-2012/020315
- DE-A1- 10 261 077
- DE-U1- 20 104 695
- DE-U1- 20 104 695

## Beschreibung

Die Erfindung betrifft ein Gleitlager- oder Führungselement in Form einer Sensorplatte für Walzgerüste nach dem Oberbegriff von Anspruch 1, und eine Vorrichtung und ein Verfahren zum Bestimmen der Lage und/oder der Position einer Walze in einem Walzgerüst.

Nach dem Stand der Technik ist es beim Betrieb von Walzstraßen zum Bearbeiten von metallischen Produkten bekannt, an den zugehörigen Walzenständern Walzen anzubringen, nämlich Arbeitswalzen und in der Regel auch daran angrenzende Stützwalzen. Auch sind Anordnungen von Arbeits-, Zwischen- und Stützwalzen oder Vielwalzen-Gerüste (z.B. Sendzimir-Gerüste) bekannt. Die Anbringung der Walzen an den Walzenständern eines Walzgerüsts erfolgt in der Regel durch sogenannte Einbaustücke.

Zum Einstellen einer gewünschten Walzdicke bzw. für eine Dickenregelung beim Walzen ist bei Walzgerüsten vorgesehen, dass zwischen den Einbaustücken der Walzen und den zugeordneten Walzenständern ein Spiel besteht, das die vertikale Bewegung der Walzen im Walzgerüst ermöglicht. Zwischen den Einbaustücken und den Walzenständern sind Verschleißplatten angebracht, welche die Funktion von Gleitlagern erfüllen. Das genannte Spiel hängt wiederum vor allem von der Walzkraft und der damit einhergehenden Einschnürung des Walzenständers während des Walzens ab. Die Einschnürung kann berechnet werden, so dass u. a. die Dicke der Verschleißplatten an den Einbaustücken der Walzen so gewählt wird, dass die Baustücke nicht im Gerüst klemmen. Ist das Spiel im Ständer zu groß, kann z. B. das Einbaustück der oberen Stützwalze kippen oder die Einbaustücke einer Walze liegen an unterschiedlichen Seiten des Walzenständers an Beides kann zu einem Schränken der Walzen in einem Walzgerüst führen. Ein weiterer Grund für ein Schränken von Walzen in einem Walzgerüst kann in einem "geometrischen" Fehler liegen, d. h. die Paarungen der verwendeten Verschleißplatten im Ständer und den Einbaustücken sorgt für ein Schränken der Walzen. Wenn z. B. auf der Auslaufseite des Gerüstes auf der Antriebs- und Bedienseite unterschiedlich dicke Verschleißplatten an den Einbaustücken verbaut sind, führt das entsprechend zu einer Schiefstellung der Walzenachse, auch wenn beide Einbaustücke auf der Auslaufseite am Ständer anliegen. Entsprechend nimmt die aktuelle und verschleißabhängige Geometrie der eingesetzten Verschleißleisten einen entscheidenden Einfluss auf die Lage der Walzen in einem Walzgerüst.

Die Vermessung von Walzgerüsten einer Walzstraße hinsichtlich der Hauptachsen der darin angebrachten Walzen ist sehr aufwändig und wird daher nur bei Bedarf durchgeführt. In diesem Zusammenhang ist es beispielsweise aus DE 201 04 695 U1 zur Ermittlung des Verschleiß-Zustands der Verschleißplatten bekannt, den Betrieb einer Walzstraße zu unterbrechen und im Anschluss daran die Walzensätze aus den Walzenständern zu entnehmen. Sodann kann der Verschleiß-Zustand der Verschleißplatten bestimmt bzw. überprüft werden, indem Messbohrungen, die in den Verschleißplatten in Form von Durchgangsbohrungen ausgebildet sind, mittels eines Tiefenmessgeräts vermessen werden. In dieser Weise wird ein Messwert für die verbleibende Stärke bzw. Dicke der Verschleißplatten an der Stelle einer jeweiligen Messbohrung generiert. Auf Grundlage einer solchen Überprüfung von allen Verschleißplatten kann dann rechnerisch der gesamte Zustand eines Walzgerüsts bestimmt werden, auch in Bezug auf die Lage der jeweiligen Walzen. Jedoch ist ein solcher Ansatz nachteilig mit großem Aufwand und zudem mit einem kostspieligen Stillstand der Walzstraße verbunden.

Entsprechend liegt der Erfindung die Aufgabe zugrunde, die Überprüfung der Lage von Walzen und deren Positionierung innerhalb eines Walzgerüsts zu optimieren.

Diese Aufgabe wird durch eine Sensorplatte mit den Merkmalen von Anspruch 1, durch eine Vorrichtung mit den in Anspruch 12 angegebenen Merkmalen und durch ein Verfahren mit den Merkmalen von Anspruch 18 gelöst. Vorteilhafte

Weiterbildungen der Erfindung sind in den abhängigen Ansprüchen definiert. Eine Sensorplatte nach dem Oberbegriff des Anspruchs 1 ist aus der WO 2012/020315 A2 bekannt.

Eine Sensorplatte nach der vorliegenden Erfindung dient als Gleitlager- oder Führungselement für Walzgerüste, und umfasst mindestens eine mit einem Bauteil in Kontakt bringbare und in einem Betrieb eines Walzgerüsts einem Verschleiß unterliegende Gleitlagerfläche. Weiterhin umfasst die erfindungsgemäße Sensorplatte zumindest einen Messsensor, nämlich konkret eine Mehrzahl von solchen Messsensoren, die in Form einer (a × b)-Matrix und vorzugsweise angrenzend zur Gleitlagerfläche angeordnet sind, derart, dass die Messsensoren einerseits nicht dem Verschleiß an der Gleitlagerfläche unterworfen sind und andererseits in der Lage sind, die auf die Sensorplatte wirkenden Kräfte und/oder Dehnungen und/oder Verformungen, die in Folge eines Flächen-, Linien- oder Punktkontakts der Sensorplatte mit dem Bauteil entstehen, zu erfassen.

An dieser Stelle wird gesondert darauf hingewiesen, dass es sich im Sinne der vorliegenden Erfindung bei einem Messsensor um einen Sensor handelt, der in der Lage ist, Kräfte und/oder Dehnungen und/oder Deformationen zu erfassen, die bei bzw. an einem plattenförmigen Element in Form der erfindungsgemäßen Sensorplatte auftreten können, wenn diese Sensorplatte im Betrieb eines Walzgerüsts bzw. einer Walzstraße in Kontakt mit einem anderen Bauteil gelangt. Wie vorstehend bereits erläutert, kann ein solcher Messsensor innerhalb der Sensorplatte und vorzugsweise angrenzend zu deren Gleitlagerfläche angeordnet sein. Dies bedeutet, dass damit ein solcher Messsensor geeignet in die Sensorplatte integriert ist. Von Bedeutung hierbei ist, dass dabei der Messsensor nicht unmittelbar an der Gleitlagerfläche der Sensorplatte exponiert angeordnet ist, so dass der Messsensor im Betrieb eines Walzgerüsts, bei dem die Sensorplatte zum Einsatz kommt, bei einem Verschleiß der Gleitlagerfläche keinen Schaden nimmt bzw. nicht zerstört wird.

### BERICHTIGTES BLATT (REGEL 91) ISA/EP

Die vorliegende Erfindung sieht weiterhin eine Vorrichtung zum Bestimmen der Lage und/oder der Position einer Walze in einem Walzgerüst vor, und umfasst eine Auswerteeinrichtung, die mit den Messsensoren der vorstehend genannten erfindungsgemäßen Sensorplatte in Signalverbindung steht. Entsprechend können die Signalwerte der einzelnen Messsensoren einer Sensorplatte von der Auswerteeinrichtung empfangen werden. Von Bedeutung für die vorliegende Erfindung ist, dass die Auswerteeinrichtung programmtechnisch derart eingerichtet ist, dass unter Berücksichtigung eines Flächen-, Linien- oder Punktkontakts, der sich an der Gleitlagerfläche der Sensorplatte mit einem daran angrenzenden Bauteil einstellen kann, die Position einer Walze, welcher dieser Sensorplatte zugeordnet ist, und/oder die Ausrichtung der zugehörigen Walzenachse dieser Walze relativ zu einem zugeordneten Walzenständer eines Walzgerüsts und/oder zumindest einer anderen Walze im gleichen Walzgerüst und/oder zumindest einer anderen Walze in der gleichen Walzstraße bestimmt werden kann.

Insbesondere unter Verwendung der vorstehend genannten Vorrichtung sieht die vorliegende Erfindung ebenfalls ein Verfahren zum Bestimmen der Lage und/oder der Position von zumindest einer Walze in einem Walzgerüst im Verlauf von dessen Betrieb vor. Bei diesem Verfahren wird eine mit den Messsensoren der vorstehend genannten erfindungsgemäßen Sensorplatte in Signalverbindung stehende Auswerteeinrichtung eingesetzt. Im Einzelnen sind bei diesem Verfahren folgende Schritte vorgesehen:
(i) Empfangen der Signalwerte der Messsensoren einer Sensorplatte nach Anspruch 10 und/oder einer Sensorplatte nach Anspruch 11 durch die Auswerteeinrichtung,
(ii) Durchführen des Schritts (i) für alle Sensorplatten, die an den Einbaustücken von Walzen in dem Walzgerüst und/oder an den Walzenständern des Walzgerüsts und/oder an zumindest einer anderen Walze der gleichen Walzstraße angebracht sind, und
(iii) Auswerten aller Signalwerte von Schritt (ii) dahingehend, dass unter Berücksichtigung eines Flächen-, Linien- oder Punktkontakts, der sich an der Gleitlagerfläche der Sensorplatten, die einer bestimmten Walze in einem bestimmten Walzenständer zugeordnet sind, mit einem daran angrenzenden Bauteil einstellt, die Position dieser bestimmten Walze und/oder die Ausrichtung der zugehörigen Walzenachse dieser bestimmten Walze relativ zu einem zugeordneten Walzenständer eines Walzgerüsts und/oder zumindest einer anderen Walze im gleichen Walzgerüst und/oder zumindest einer anderen Walze in der gleichen Walzstraße bestimmt wird.

Der vorliegenden Erfindung liegt die wesentliche Erkenntnis zugrunde, dass hiermit die Lage von Walzen innerhalb eines Walzgerüsts bestimmt bzw. erkannt werden kann, nämlich "online", d.h. im laufenden Walzbetrieb eines Walzgerüsts bzw. einer Walzstraße. Im Sinne der vorliegenden Erfindung ist mit der "Lage von Walzen" die Stelle gemeint, an der sich die Anlageflächen beispielsweise der Walzeneinbaustücke bezogen auf die Anlageflächen des Walzenständers befinden. Hiermit ist dann ein Rückschluss auf die Position einer Walze und deren Walzenachse innerhalb eines Walzenständers möglich. Auf Grundlage dessen ist es dann auch möglich, die Lage aller Walzenachsen in einem Gerüst zueinander in Relation zu setzen bzw. hierzu eine Information zu gewinnen, nämlich - wie erläutert - bereits unmittelbar während des laufenden Walzbetriebs.

Falls es im laufenden Walzbetrieb zu einer unzulässigen Positionsabweichung einer Walze und ihrer zugehörigen Walzenachse in Bezug auf benachbarte Walzen kommt und dadurch ggf. ein Schränken der Walzen eintritt, kann dies bei der vorliegenden Erfindung mittels der Anordnung der Messsensoren in Form einer (a x b)-Matrix erkannt werden, weil diese Matrix-Anordnung der Messsensoren das Detektieren eines Flächen-, Linien- oder Punktkontaktes, der sich ggf. zwischen einem Walzeneinbaustück und einem hierzu angrenzenden Bauteil des Walzgerüsts einstellt, möglich macht. Diesbezüglich ist zu verstehen, dass, je dichter diese Matrix-Anordnung von Messsensoren gewählt ist (gleichbedeutend mit höheren Werten für die Parameter a und b), desto genauer bzw. besser kann ein "Wandern" eines Walzeneinbaustücks bzw. dessen Verkanten relativ zu einem daran angrenzenden Bauteil erkannt werden. Dies ist insbesondere für den Fall möglich, dass eine erfindungsgemäße Sensorplatte an einem Einbaustück einer Walze eines Walzgerüsts befestigt ist und hierbei die Funktion eines Gleitlager- bzw. Führungselements in dem Walzgerüst erfüllt.

In vorteilhafter Weiterbildung der Erfindung kann eine Anordnung der Messsensoren innerhalb der Sensorplatte dadurch erfolgen, dass in der Sensorplatte eine Mehrzahl von Sacklochbohrungen ausgebildet sind. Die Messsensoren sind dann innerhalb dieser Sacklochbohrungen aufgenommen bzw. eingesetzt. Diesbezüglich versteht sich, dass bei der Herstellung einer solchen Sensorplatte die Sacklochbohrungen in die Sensorplatte von einer der Gleitlagerfläche entgegengesetzten Rückseite her eingebracht werden können. Ergänzend und/ oder alternativ hierzu ist es auch möglich, eine solche Sacklochbohrung von einer seitlichen Randfläche der Sensorplatte her einzubringen. Die Richtung, aus der eine jeweilige Sacklochbohrung für die Aufnahme eines Messsensors in die Sensorplatte im Zuge von deren Herstellung eingebracht wird, ist jeweils von den konkreten Abmessungen einer Sensorplatte und deren Einbau in einem Walzgerüst bzw. Befestigung an einem Einbaustück abhängig.

In vorteilhafter Weiterbildung der Erfindung kann für eine Sensorplatte auch vorgesehen sein, dass in deren Gleitlagerfläche auch mindestens ein Verschleißsensor integriert ist, um damit während des laufenden Walzbetriebs einen Materialabtrag an der Gleitlagerfläche erfassen zu können. Ein solcher Verschleißsensor umfasst einen elektrischen Widerstand, der aus mindestens einem elektrischen Leiter gebildet ist, welcher vorzugsweise abschnittsweise parallel zu der Gleitlagerfläche verlaufend angeordnet ist, wobei der Verschleißsensor bei einem Materialabtrag an der Gleitlagerfläche selber mechanisch mit abgetragen wird. Hierbei ist es zweckmäßig, dass in die Gleitlagerfläche der Sensorplatte eine Mehrzahl von solchen Verschleißsensoren integriert sind. Eine solche Mehrzahl von Verschleißsensoren kann in Form einer (m x n)-Matrix angeordnet sein. Des Weiteren kann sich empfehlen, dass der elektrische Widerstand eines Verschleißsensors aus einer Mehrzahl elektrischer Leiter gebildet ist, welche vorzugsweise zumindest abschnittsweise parallel und in unterschiedlichen Tiefen in Bezug auf die Gleitlagerfläche angeordnet sind.

In vorteilhafter Weiterbildung der Erfindung können die Parameter a und b, mit denen die (a x b)-Matrix für die Anordnung der Messsensoren gebildet ist, und die Parameter m und n, mit denen die (m x n)-Matrix für die Anordnung der Verschleißsensoren gebildet ist, jeweils aus ganzzahligen Werten bestehen, derart, dass damit die Matrix-Anordnung der Messsensoren bzw. Verschleißsensoren an die Umfangskontur der Sensorplatte angepasst ist. Diesbezüglich versteht sich, dass ein Bestimmen der Lage und/oder der Position einer Walze in einem Walzgerüst umso genauer bzw. präziser ist, je größer die Parameter a und b für die Matrix-Anordnung der Messsensoren gewählt sind. Dies begründet sich mit der größeren Flächenabdeckung an der Gleitlagerfläche durch die Messsensoren, so dass ein möglicher Linien- oder gar nur Punktkontakt, der bei einem Verkanten eines Walzeneinbaustücks auftreten kann, mit größerer Wahrscheinlichkeit bzw. Genauigkeit von den Messsensoren, die angrenzend zur Gleitlagerfläche angeordnet sind, erfasst werden kann. Mutatis mutandis gilt dies auch für das Bestimmen des Verschleiß-Zustands an der Gleitlagerfläche einer Sensorplatte, im Hinblick auf die Parameter m und n für die Matrix-Anordnung der Verschleißsensoren.

In vorteilhafter Weiterbildung der Erfindung können die Parameter a und b, mit denen die (a x b)-Matrix für die Anordnung der Messsensoren gebildet ist, und die Parameter m und n, mit denen die (m x n)-Matrix für die Anordnung der Verschleißsensoren gebildet ist, jeweils aus ganzzahligen Werten bestehen, die aus dem Zahlenbereich {1-100}, vorzugsweise aus dem Zahlenbereich {1-50}, weiter vorzugsweise aus dem Zahlenbereich {1-20} gewählt sind. Beispielsweise können die Messsensoren bzw. Verschleißsensoren in Form einer 2 x 2-Matrix, in Form einer 3 x 2-Matrix, in Form einer 3 x 1-Matrix, in Form einer 3 x 3-Matrix, in Form einer 4 × 4-Matrix, in Form einer 5 × 5-Matrix, in Form einer 6 × 6-Matrix, in Form einer 6 × 4-Matrix, in Form einer 7 × 7-Matrix, in Form einer 8 × 8-Matrix, in Form einer 9 × 9-Matrix, in Form einer 10 × 10-Matrix, in Form einer 11 × 11 -Matrix oder in Form einer 12 × 12-Matrix angeordnet sein.

In vorteilhafter Weiterbildung der Erfindung kann an der Sensorplatte zumindest ein maschinenlesbarer Datenspeicher angebracht bzw. vorgesehen sein, in dem Signal- bzw. Messwerte der Messsensoren gespeichert werden können. In gleicher Weise können in diesem Datenspeicher auch die Messwerte der Verschleißsensoren abgelegt werden, falls solche ergänzend in die Gleitlagerfläche einer Sensorplatte integriert sind.

Zur Übertragung der Messwerte, die beispielsweise in dem vorstehend genannten Datenspeicher abgelegt worden sind, an einen externen Kommunikationspartner ist es zweckmäßig, wenn die Sensorplatte mit einer Sendeeinheit ausgestattet ist, die mit den Messsensoren, und ggf. auch mit den Verschleißsensoren, in Signalverbindung steht. Hierbei kann die Übertragung der Messwerte der Sensoren über eine Funkstrecke oder kabelgebunden an eine Auswerteeinrichtung übertragbar sind.

Im Hinblick auf eine räumliche Zuordnung der gewonnenen Messwerte von Sensorplatten ist die Kenntnis zweckmäßig, an welcher Stelle in einem Walzgerüst diese Sensorplatten verbaut bzw. montiert sind, beispielsweise an welchem Walzensatz oder an welchem konkreten Walzenständer. Zu diesem Zweck sieht eine vorteilhafte Weiterbildung der Erfindung vor, dass die Sensorplatten jeweils mit einem Datenträger mit einer maschinenlesbaren Kennung ausgestattet sind, mittels der die Sensorplatte eindeutig identifizierbar und deren Position im Walzgerüst lokalisierbar ist. Beispielsweise kann ein solcher Datenträger aus einem RFID-Transponder, aus einem NFC (Near-Field-Communication)-Element und/oder aus einem QR-Code gebildet sein. In dieser Weise ist für die in einem Walzgerüst verbauten Sensorplatten eine eindeutige Identifizierung in Verbindung mit einer entsprechenden Lokalisierung gewährleistet.

Wie bereits erläutert, kann sich für eine erfindungsgemäße Sensorplatte empfehlen, dass sie an einem Einbaustück einer Walze befestigt ist. Dies ist in gleicher Weise für eine Arbeitswalze und/oder für eine Stützwalze oder jede andere Walze in einem Walzgerüst möglich.

Ergänzend und/oder alternativ empfiehlt sich, dass eine erfindungsgemäße Sensorplatte an einem Walzenständer eines Walzgerüsts befestigt ist.

In vorteilhafter Weiterbildung kann für die erfindungsgemäße Vorrichtung vorgesehen sein, dass deren Auswerteeinrichtung in Signalverbindung mit einem Zentralsystem mit einer Speicher- und Auswerteeinheit steht. Hierbei können die Daten der Auswerteeinrichtung an das Zentralsystem über eine Signalstrecke übertragen und anschließend darin ausgewertet werden. Zur Realisierung der Datenübertragung ist es zweckmäßig, dass die Auswerteeinrichtung mit einem Kommunikationsmodul ausgestattet ist, mit dem für die Auswerteeinrichtung ein Datenaustausch mit dem Zentralsystem und/oder mit externen Kommunikationspartnern möglich ist.

Im Hinblick auf eine Auswertung der Daten innerhalb des Zentralsystems ist dessen Auswerteeinheit programmtechnisch derart eingerichtet, dass die Lage aller Walzenachsen in einer Walzstraße bestimmbar und miteinander in Relation bringbar bzw. miteinander vergleichbar sind. Hierbei kann auch vorgesehen sein, dass mittels der Auswerteeinheit ein Warnsignal erzeugt wird, falls es zu einer Abweichung der Ausrichtung bzw. Lage der Walzenachsen von vorbestimmten Grenzwerten kommt. Insoweit können mögliche Betriebsstörungen einer Walzstraße und zugehöriger Walzgerüste bereits frühzeitig erkannt und ggf. rechtzeitig Gegenmaßnahmen getroffen werden.

Falls bei der erfindungsgemäßen Vorrichtung auch Sensorplatten eingesetzt werden, die mit den erläuterten Verschleißsensoren ausgestattet sind, ist die Auswerteeinrichtung der erfindungsgemäßen Vorrichtung programmtechnisch auch derart eingerichtet, dass damit eine Änderung, insbesondere einer Erhöhung, des Ohm'schen Widerstandswertes des elektrischen Leiters eines bestimmten Verschleißsensors in Abhängigkeit seines eigenen Materialabtrags erfasst werden kann, um hierdurch einen Rückschluss von der erkannten Änderung des Widerstandwertes auf die Größe des Materialabtrags an der Gleitlagerfläche und/oder auf die verbleibende Dicke der Gleitlagerfläche an der Stelle dieses bestimmten Verschleißsensors zu gewährleisten.

In Bezug auf das vorstehend genannte erfindungsgemäßen Verfahren ist es zweckmäßig, dass in dessen Schritt (iii) die Signalwerte von allen Sensorplatten für einen bestimmten Walzenständer ausgewertet werden, so dass damit die Lage aller Walzenachsen in diesem bestimmten Walzenständer bekannt ist. Hierbei ist es zweckmäßig, wenn die Mess- bzw. Signalwerte von allen Sensorplatten an ein Zentral- bzw. Rechnersystem gesendet und darin mittels eines Algorithmus verarbeitet bzw. analysiert werden, mit dem ein Gesamtüberblick über die Position der einzelnen Walzen innerhalb eines Walzgerüsts getroffen werden kann. Weiterhin ist es möglich, einzelne Walzen miteinander zu vergleichen und somit die relative Lage der Walzen zueinander zu bestimmen. Damit kann festgestellt werden, ob die Walzen z. B. schränken oder wie die Baustücke in Bezug auf die Ständer liegen, d. h., befinden sie sich in der gewünschten Position oder sind sie gekippt, so dass sie im Gerüst eingeklemmt sind oder oszillieren sie während des Walzbetriebs.

Des Weiteren ist es bei dem erfindungsgemäßen Verfahren im Zuge der Auswertung von Schritt (iii) zweckmäßig, dass die Signalwerte von zwei insbesondere benachbarten Walzen, insbesondere von zwei benachbarten Arbeitswalzen und/oder von einer Stützwalze und einer hierzu benachbarten Arbeitswalze eines Walzgerüsts und/oder von zwei Walzen in der gleichen Walzstraße, und/oder von je zwei zueinander benachbarten Walzenpaaren und/oder von einem Satz Arbeitsund Stützwalzen und/oder von einem Satz Arbeits-, Zwischen- und Stützwalzen dahingehend überprüft werden, ob die Achsen dieser Walzen zueinander parallel ausgerichtet sind oder zwischen sich einen Winkel (α) einschließen. In dieser Weise kann früh- bzw. rechtzeitig erkannt werden, ob sich ein unerwünschtes Schränken von Walzen anbahnt, so dass ggf. rechtzeitig Gegenmaßnahmen eingeleitet werden können bzw. ein "Gegensteuern" möglich ist. Anders ausgedrückt, können mit Hilfe der vorliegenden Erfindung sich anbahnende Walzinstabilitäten wie z.B. das Schränken von Walzen aufgrund von "Geometriefehlern frühzeitig erkannt werden", so dass die Walzstabilität und damit die Produktion in einem Walzwerk erhöht werden.

Des Weiteren wird hervorgehoben, dass es im Zuge der Auswertung von Schritt (iii) des Anspruchs 18 möglich ist, die Lage bzw. Position von allen Walzenachsen in einer Walzstraße zueinander in Relation zu setzen. Dies gilt auch für Walzen, die in verschiedenen Walzenständern angeordnet sind, dabei jedoch der gleichen Walzstraße angehören.

Die vorliegende Erfindung stellt darauf ab, ein "intelligentes Walzgerüst" zu schaffen und derart mit Messtechnik auszustatten, so dass praktisch zu jedem Zeitpunkt bestimmt werden kann, wo sich die einzelnen Komponenten des Systems Walze bezogen auf den Ständer bzw. des Gesamtsystems (Walze, Ständer, Walzstraße) bezogen auf die Walzachse des zu walzenden Walzgutes befinden. Zu dieser Messtechnik zählt insbesondere die vorstehend genannte Sensorplatte, in der eine Mehrzahl von Messsensoren in Form einer (a x b)-Matrix angrenzend zur Gleitlagerfläche angeordnet und ggf. auch eine Mehrzahl von Verschleißsensoren vorzugsweise in Form einer (m x n)-Matrix in die Gleitlagerfläche der Sensorplatte integriert sind. Die erläuterte Matrix-Anordnung dieser Sensoren gewährleistet eine hohe Informationsdichte einerseits in Bezug auf die Lage und/oder die Position einer Walze in einem Walzgerüst, und ggf. auch in Bezug auf den Verschleißzustand der Gleitlagerfläche einer jeweiligen Sensorplatte.

Der Einsatz der vorliegenden Erfindung eignet sich insbesondere bei Grobblechgerüsten, , bei Vielwalzengerüsten (z.B. Sendzimir-Gerüste) oder bei Warm- oder Kaltwalzstraßen.

Nachstehend sind Ausführungsbeispiele der Erfindung anhand einer schematisch vereinfachten Zeichnung im Detail beschrieben.

Es zeigen:
- Fig. 1: eine Draufsicht auf eine erfindungsgemäße Sensorplatte, und eine Darstellung einer erfindungsgemäßen Vorrichtung mit einer solchen Sensorplatte,
- Fig. 2: eine Querschnittsansicht eines Teils der Sensorplatte von Fig. 1,
- Fig. 3-7: weitere Ausführungsformen einer erfindungsgemäßen Sensorplatte, jeweils in Draufsicht,
- Fig. 8: eine Querschnittsansicht eines Teils der Sensorplatte von Fig. 7,
- Fig.9-13: weitere Ausführungsformen der erfindungsgemäßen Sensorplatte, die auch einen in die Gleitlagerfläche der Sensorplatte integrierten Verschleißsensor umfassen,
- Fig. 14: einen Walzensatz bestehend aus Stütz- und Arbeitswalzen inklusive Einbaustücken, jeweils in einer Seitenansicht und einer Ansicht von vorne,
- Fig. 15: einen Walzenständer, jeweils in einer Perspektivansicht und in einer Seitenansicht, an dem erfindungsgemäße Sensorplatten befestigt sind,
- Fig. 16: die Schrittabfolge eines erfindungsgemäßen Verfahrens,
- Fig. 17: eine exemplarische Darstellung der Ausrichtung der Walzen in einem Quarto-Walzgerüst,
- Fig. 18: eine exemplarische Darstellung des Schränkens von zwei Walzen beispielsweise bei dem Quarto-Walzgerüst von Fig. 17, und
- Fig. 19: die Schrittabfolge eines weiteren Verfahrens gemäß der vorliegenden Erfindung.

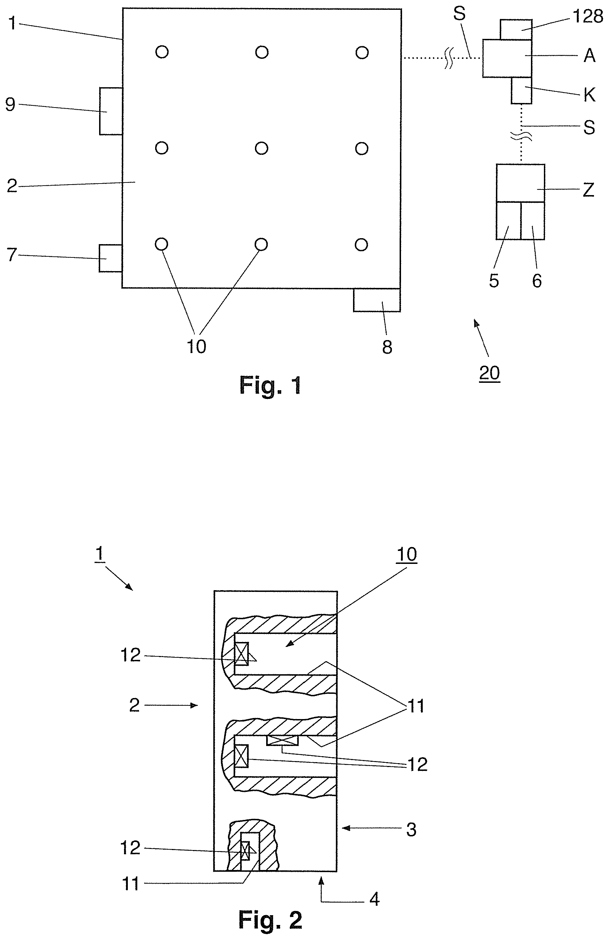

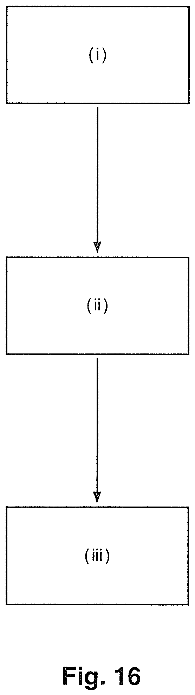

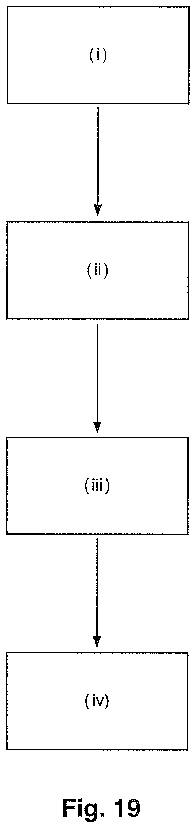

Nachstehend sind unter Bezugnahme auf die Fig. 1-15 bevorzugte Ausführungsformen einer Sensorplatte 1 und einer Vorrichtung 20 gemäß der vorliegenden Erfindung dargestellt und erläutert, mit der die Lage und/oder die Position einer Walze in einem Walzgerüst bestimmt werden kann. Des Weiteren verdeutlichen Fig. 16 und Fig. 19 jeweils einen Ablauf eines erfindungsgemäßen Verfahrens. Gleiche Merkmale in der Zeichnung sind jeweils mit gleichen Bezugszeichen versehen. An dieser Stelle wird gesondert darauf hingewiesen, dass die Zeichnung lediglich vereinfacht und insbesondere ohne Maßstab dargestellt ist.

Fig. 1 zeigt eine Draufsicht auf eine erfindungsgemäße Sensorplatte 1. Diese Sensorplatte kann als Gleitlager- oder Führungselement für Walzgerüste dienen. Hierzu weist die Sensorplatte 1 an einer Seite eine Gleitlagerfläche 2 auf. Wenn die Sensorplatte 1 in einem Walzgerüst montiert ist, beispielsweise an dem Einbaustück einer Arbeits- oder Stützwalze oder an einem Walzenständer eines Walzgerüsts, kann die Gleitlagerfläche 2 der Sensorplatte 1 in Kontakt mit einem daran angrenzenden Bauteil gelangen und hierbei einem Verschleiß unterliegen.

Die Sensorplatte 1 ist mit einer Mehrzahl von Messsensoren 10 ausgestattet. Diese Messsensoren 10 sind in der Draufsicht von Fig. 1 vereinfachend mit Kreisen symbolisiert. Gleichwohl verhält es sich so, dass diese Messsensoren 10 nicht unmittelbar an der Gleitlagerfläche 2 der Sensorplatte 1 exponiert sind, wie nachfolgend noch erläutert ist.

Ausweislich der Draufsicht von Fig. 1 sind diese Messsensoren 10 bei dieser Ausführungsform in Form einer 3 x 3-Matrix angeordnet, nämlich angrenzend zur Gleitlagerfläche 2. Dies bedeutet, dass die Messsensoren 10 nicht unmittelbar an der Gleitlagerfläche 2 exponiert sind, was zur Folge hat, dass bei einem Materialabtrag von der Gleitlagerfläche 2 im Walzbetrieb die Messsensoren 10 nicht geschädigt bzw. zerstört werden. Insoweit sind die Kreise, mit denen in der Darstellung von Fig. 1 die Messsensoren 10 in Form der Anordnung einer 3 × 3-Matrix symbolisiert sind, lediglich vereinfachend zu verstehen und sollen lediglich die Position dieser Messsensoren 10 angrenzend zur Gleitlagerfläche 2 veranschaulichen.

Die Anbringung der Messsensoren 10 an bzw. innerhalb der Sensorplatte 1 kann durch Sacklochbohrungen 11 erfolgen, die - ausweislich der Querschnittsansicht von Fig. 2 - von einer der Gleitlagerfläche entgegengesetzten Rückseite 3 der Sensorplatte 1 darin eingebracht wird. Des Weiteren ist es auch möglich, Sacklochbohrungen 11 von der seitlichen Randfläche 4 her in die Sensorplatte 1 einzubringen.

Ein Messsensor 10 kann einen Dehnungsmessstreifen aufweisen, auch als DMS-Element bekannt, oder in Form eines solchen DMS-Elements 12 ausgebildet sein. Für diesen Fall kann ein DMS-Element 12 an der Stirnseite einer Sacklochbohrung 11 und/oder an der Innenumfangsfläche einer solchen Sacklochbohrung 11 befestigt sein. Jedenfalls ist es mit einem Messsensor 10 möglich, Kräfte und/oder Dehnungen und/oder Verformungen zu detektieren, die auf die Sensorplatte 1 im Walzbetrieb einwirken.

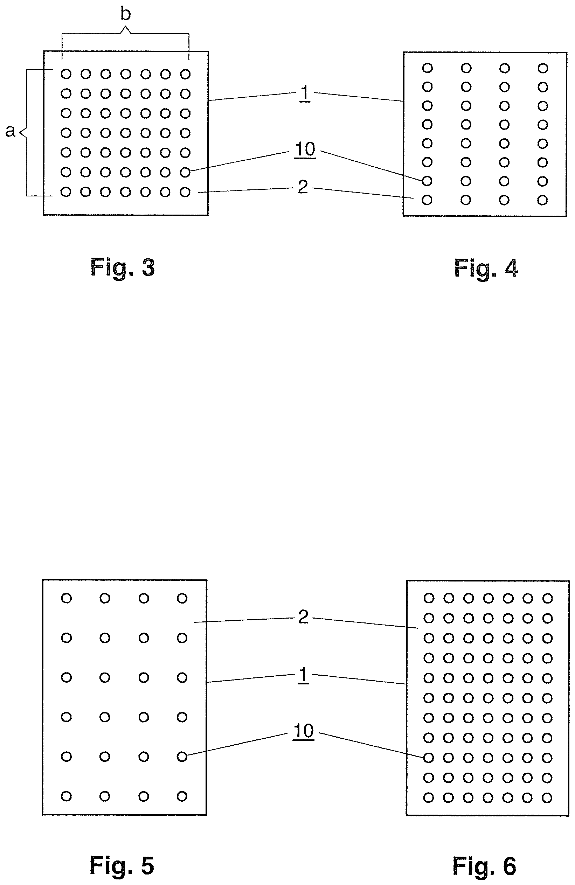

In den Fig. 3-6 sind weitere Ausführungsformen für eine Sensorplatte 1 jeweils in Draufsicht gezeigt. Fig. 3 verdeutlicht mit den Buchstaben a und b die Logik einer Matrix-Anordnung für die Messsensoren: Mit dem Parameter "a" sind die Reihen der Messsensoren 10 in vertikaler Ausrichtung definiert (= "Zeilen"), wobei mit dem Parameter "b" die Reihen der Messsensoren in horizontaler Ausrichtung (= "Spalten") definiert sind. Diesbezüglich wird darauf hingewiesen, dass diese Parameter a und b jeweils aus ganzzahligen Werten gebildet sind und aus dem Zahlenbereich von {1-100} gewählt sein können, in beliebiger Kombination miteinander.

Bei der Darstellung von Fig. 3 sind die Messsensoren 10 in Form einer 7 × 7-Matrix angeordnet. In Fig. 4 ist eine 8 × 4-Matrix, in Fig. 5 eine 6 × 4-Matrix, und in Fig. 6 eine 11 × 7-Matrix für die Anordnung der Messsensoren 10 gezeigt.

In Bezug auf die Sensorplatten 1 gemäß der Fig. 5 und 6 wird hervorgehoben, dass diese im Unterschied zu den Ausführungsformen von Fig. 1, 3 und 4 nicht quadratisch, sondern rechteckig ausgebildet sind. Jedenfalls wird anhand der gezeigten Beispiele für die Matrix-Anordnung bei den Ausführungsformen der Fig. 5 und 6 deutlich, dass mit dem größeren Wert für den Parameter a als im Vergleich zum Parameter b erreicht wird, dass die resultierende Matrix- Anordnung der Messsensoren 10 an die (rechteckige) Umfangskontur der der Sensorplatte 1 angepasst ist.

An dieser Stelle wird hervorgehoben, dass es sich bei den hier gezeigten Ausführungsformen für die Matrix-Anordnungen der Messsensoren 10 nur um Beispiele handelt. Insbesondere verhält es sich so, dass die mögliche Anzahl von Messsensoren in vertikaler Richtung (= Parameter a) bzw. in horizontaler Richtung (= Parameter b) wesentlich größer als die Beispiele der Fig. 1 und Fig. 3-6 sein kann, wenn von dem verfügbaren Zahlenbereich, der bis zum Wert 100 reicht, Gebrauch gemacht wird.

Die erfindungsgemäße Vorrichtung 20 ist in Zusammenschau mit der Sensorplatte 1 ebenfalls in Fig. 1 gezeigt. Die Vorrichtung 20 umfasst eine Auswerteeinrichtung A, die über eine Signalstrecke S mit den Messsensoren 10 in Signalverbindung steht. Entsprechend können die Signalwerte der einzelnen Messsensoren von der Auswerteeinrichtung A empfangen werden.

Die Auswerteeinrichtung A ist mit einem Kommunikationsmodul K ausgerüstet. Hierdurch ist es möglich, die von der Auswerteeinrichtung A empfangenen Daten über einen weitere Signalstrecke S an ein zentrales Rechnersystem, nachfolgend Zentralsystem Z genannt, zu senden, das eine Speichereinheit 5 und eine Auswerteeinheit 6 umfasst. In der Fig. 1 sind die genannten Signalstrecken S jeweils mit punktierten Linien symbolisiert.

Die Sensorplatte 1 kann mit einem maschinenlesbaren Datenspeicher 7 ausgestattet sein, in dem die Messwerte der Messsensoren 10 (zwischen)gespeichert werden können. Des Weiteren kann die Sensorplatte 1 mit einer Sendeeinheit 8 ausgerüstet sein, beispielsweise um die in dem Datenspeicher 7 gespeicherten Messwerte der Messsensoren 10 an die Auswerteeinrichtung A zu senden. Alternativ hierzu kann die Sendeeinheit 8 unmittelbar mit den Messsensoren 10 in Signalverbindung stehen, wobei dann im Walzbetrieb die Mess- bzw. Signalwerte der Messsensoren 10 von der Sendeeinheit 8 unmittelbar an die Auswerteeinrichtung A versendet werden.

Die Sensorplatte 1 kann mit einem Datenträger 9 mit maschinenlesbarer Kennung ausgerüstet sein. Mittels eines solchen Datenträgers 9 ist es möglich, die Sensorplatte 1 in einem Walzgerüst sowohl eindeutig zu identifizieren als auch deren Position innerhalb des Walzgerüsts entsprechend zu lokalisieren.

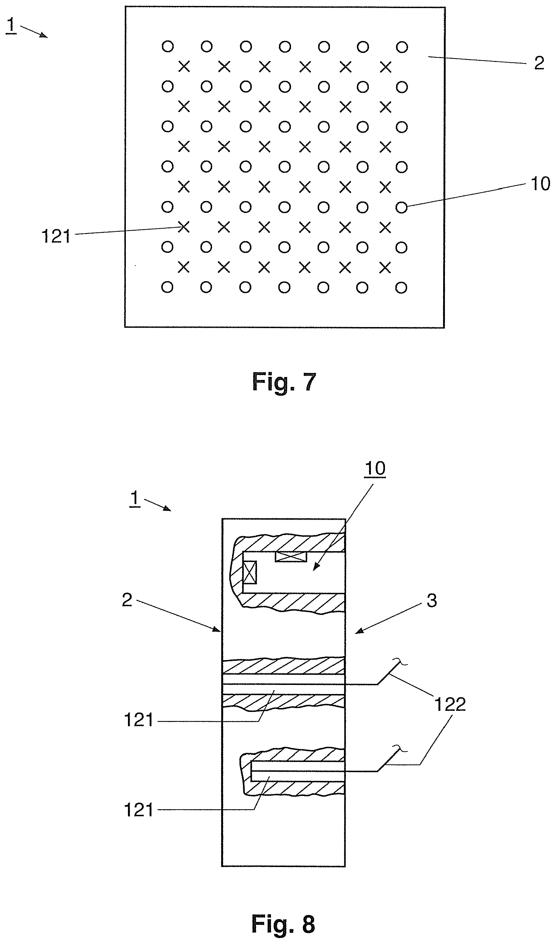

Nach einer weiteren Ausführungsform der Erfindung kann eine Sensorplatte 1 neben den Messsensoren 10 auch mit Verschleißsensoren 121 ausgestattet sein. Eine solche Ausführungsform ist in der Darstellung von Fig. 7 gezeigt, wobei die Messsensoren 10 jeweils mit Kreisen, und die Verschleißsensoren 121 jeweils mit einem "x" symbolisiert sind.

Bei den Verschleißsensoren 121 verhält es sich so, dass diese entweder direkt in die Gleitlagerfläche 2 integriert sind, oder angrenzend zur Gleitlagerfläche 2 verlaufen. Jedenfalls sind diese Verschleißsensoren 121 in Form einer (m x n)-Matrix verteilt über die Gleitlagerfläche 2 angeordnet, wobei der Parameter m die Anzahl der Verschleißsensoren 121 in vertikaler Richtung und der Parameter n die Anzahl der Verschleißsensoren in horizontaler Richtung bestimmt. In gleicher Weise wie bei der Anordnung der Messsensoren in Form einer (a x b)-Matrix können die Parameter m und n für die Matrix-Anordnung der Verschleißsensoren 121 aus dem Zahlenbereich von {1-100} gewählt sein, in beliebiger Kombination miteinander.

Bei dem Beispiel von Fig. 7 sind die Messsensoren 10 in einer 7 x 7-Matrix angeordnet, wobei die Verschleißsensoren 121 in einer 6 x 6-Matrix angeordnet sind.

Nachfolgend ist anhand der Fig. 8 die Funktionsweise der Verschleißsensoren 121 und deren Anordnung innerhalb einer Sensorplatte 1 im Detail erläutert

Fig. 8 zeigt die Sensorplatte 1 von Fig. 7 in einer Querschnittsansicht. Hierin ist im oberen Bereich zunächst ein Messsensor 10 in einer Sacklochbohrung vorgesehen, in Entsprechung der Ausführungsform von Fig. 2. Im mittigen bzw. unteren Bereich der Darstellung von Fig. 8 sind jeweils Verschleißsensoren 121 gezeigt, die elektrische Leiter 122 aufweisen. Zwecks einer vereinfachten Darstellung sind diese Leiter 122 in Fig. 8 lediglich als einfache Linie symbolisiert - gleichwohl verhält es sich bei der tatsächlichen Ausführung dieser Leiter 122 so, dass diese in Form einer elektrischen Leiterbahn ausgebildet sind, wie nachfolgend noch erläutert.

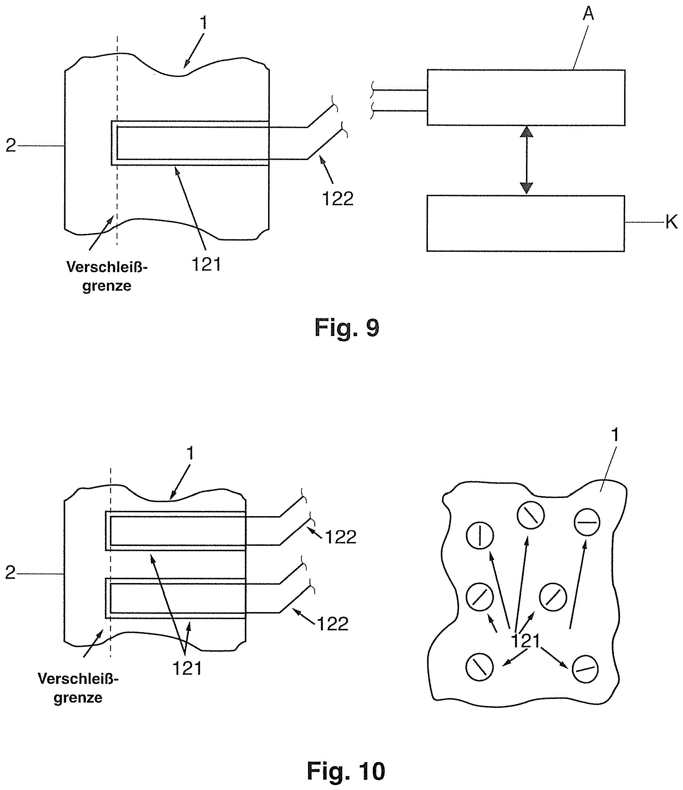

Fig. 9 zeigt den unteren Bereich der Sensorplatte 1 von Fig. 8. Hierbei ist zu erkennen, dass ein elektrischer Leiter 122 (in Form einer geschlossenen Leiterbahn) des Verschleißsensors 121 nicht bis zur Gleitlagerfläche 2 geführt ist, sondern an einer vorbestimmten Verschleißgrenze endet, hier vereinfacht durch eine gestrichelte Linie symbolisiert und parallel zur Gleitlagerfläche 2 verlaufend. Der elektrische Leiter 122 steht ebenfalls in Signalverbindung mit der Auswerteeinrichtung A.

Das längliche Rechteck, in dem bei der Ausführungsform von Fig. 9 der elektrische Leiter 121 innerhalb der Sensorplatte 1 verläuft, stellt eine Sensoreinheit dar. Das Grundmaterial der Sensoreinheit ist so ausgeführt, dass es mindestens die gleiche Härte wie die Sensorplatte 1 besitzt, idealerweise aber weicher ist, so dass es sich mindestens im gleichen Maße wie die Sensorplatte 1 abgenutzt, wenn es an deren Gleitlagerfläche 2 im Walzbetrieb zu einem Materialabtrag kommt. Die Position der Leiterbahn bzw. des elektrischen Leiters 122 in der Sensoreinheit ist möglichst exakt definiert, da hierüber u. a. die Auflösung des Verschleißes der Sensorplatte 1 bestimmt wird, und muss zumindest teilweise möglichst parallel zu der zu messenden Oberfläche in Form der Gleitlagerfläche 2 ausgerichtet sein.

Die Querschnittsansicht der Sensorplatte 1 gemäß Fig. 10 verdeutlicht die gleichmäßige bzw. regelmäßige Anordnung von zwei Sensoreinheiten mit den Verschleißsensoren 121.

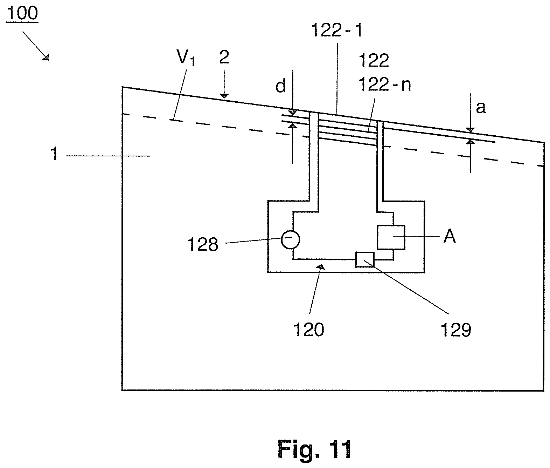

Darüber hinaus kann die Messeinrichtung 120 optional noch ein Modul 129 (vgl. Fig. 11) zur vorzugsweise kabellosen Übertragung von Messdaten oder von Auswertedaten, die von der Auswerteeinrichtung A erzeugt worden sind, an einen entfernten Ort zur Weiterverarbeitung der Daten aufweisen.

In Fig. 11 ist verdeutlicht, dass der elektrische Widerstand bzw. Leiter 122 aus einer Mehrzahl N von elektrischen Leitern 122-n mit 1 ≤ n ≤ N gebildet ist, welche abschnittsweise parallel zueinander und parallel zu der Verschleißfläche in Form der Gleitlagerfläche 2 angeordnet sind. Der Abstand der einzelnen Leiter 122-n zu der ursprünglichen Verschleißfläche ist mit dem Buchstaben a bezeichnet. Das Bezugszeichen d bezeichnet hier den Abstand zweier benachbarter Leiter zueinander. Je geringer dieser Abstand ist, desto genauer ist die Auflösung, mit welcher ein Materialabtrag an der Verschleißfläche in Form der Gleitlagerfläche 2 erfasst werden kann.

Für die Funktionsweise der Verschleißsensoren 121 ist es von Bedeutung, dass der elektrische Leiter 122 stets in die abzutragende Verschleißfläche integriert ist, um selber mit abgetragen zu werden und um auf diese Weise selber eine Änderung seines Ohm'schen Widerstandswerte zu erfahren.

Die Ausgestaltung des elektrischen Leiters 122 gemäß Fig. 11 sieht vor, dass die elektrischen Leiter 122-n lediglich im Bereich der Gleitlagerfläche 2 parallel zu dieser und parallel zueinander ausgebildet sind.

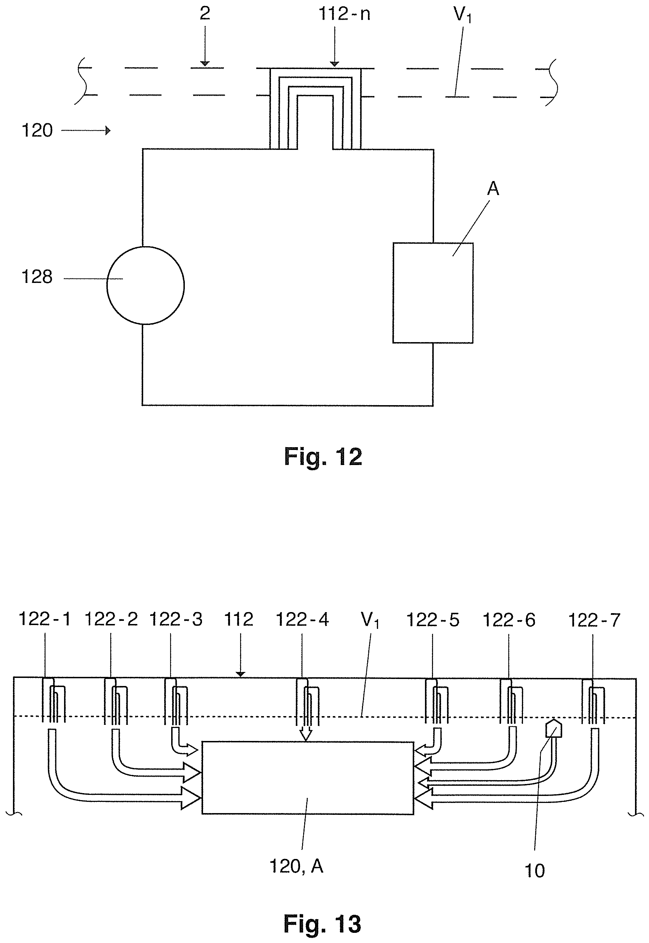

Im Zusammenhang mit den Verschleißsensoren 121 wird durch die Fig. 12 veranschaulicht, dass die Leiter bzw. Bahnbereiche 122-n des elektrischen Leiters 122, alternativ zur Ausführungsform von Fig. 11, auch U-förmig parallel zueinander angeordnet sein können.

Die Anordnung einer Mehrzahl von Verschleißsensoren 121 in Form einer (n x m)-Matrix, beispielsweise in Form einer 6 x 6-Matrix bei der Sensorplatte 1 gemäß Fig. 7, ist in Fig. 13 nochmals in einer Querschnittsansicht gezeigt. Hierbei ist es möglich, dass jedem der einzelnen Widerstände 122-k mit 1 ≤ k ≤ K = 7 eine eigene Messeinrichtung 120 zugeordnet ist. Alternativ, und wie in Fig. 13 gezeigt, ist es jedoch auch möglich, dass die einzelnen elektrische Widerstände 122-k jeweils über Kabelverbindungen an eine zentrale Messeinrichtung 120 und insbesondere an die zentrale Auswerteeinrichtung A (vgl. Fig. 1) angeschlossen sind.

Bei allen der vorstehend genannten Ausführungsform der erfindungsgemäßen Vorrichtung 20 kann vorgesehen sein, dass die Auswerteeinrichtung mit einer Energiequelle 128 ausgerüstet ist (vgl. Fig. 1, Fig. 11, Fig. 12). Eine solche Energiequelle 128 kann z.B. herkömmlich durch Batterien oder Akkus oder beispielsweise kabelgebunden ausgebildet sein. Alternativ hierzu ist es auch möglich, die Energiequelle als Energy-Harvesting-Einheit auszubilden, mit der Energie entweder thermisch und/oder mechanisch gewonnen werden kann.

Ungeachtet des Typs der Energiequelle 128 besteht eine weitere vorteilhafte Weiterbildung der Erfindung darin, dass mit dieser Energiequelle 128 nicht nur die Auswerteeinrichtung A gespeist wird, sondern auch die verschiedenen Sensoren der Sensorplatte 1, d.h. die Verschleißsensoren 121 und ggf. auch die Messsensoren 10, und des Weiteren auch die verschiedenen elektrische Bauelemente, die an einer Sensorplatte 1 vorgesehen oder daran angebracht sein können, beispielsweise der maschinenlesbare Datenspeicher 7, die Sendeeinheit 8 und/oder der Datenträger 9 mit maschinenlesbarer Kennung zur eindeutigen Identifikation der Sensorplatte 1. In dieser Weise handelt es sich dann bei der erfindungsgemäßen Vorrichtung 20 um ein energieautarkes System, das nicht auf eine externe separate Energiequelle angewiesen ist.

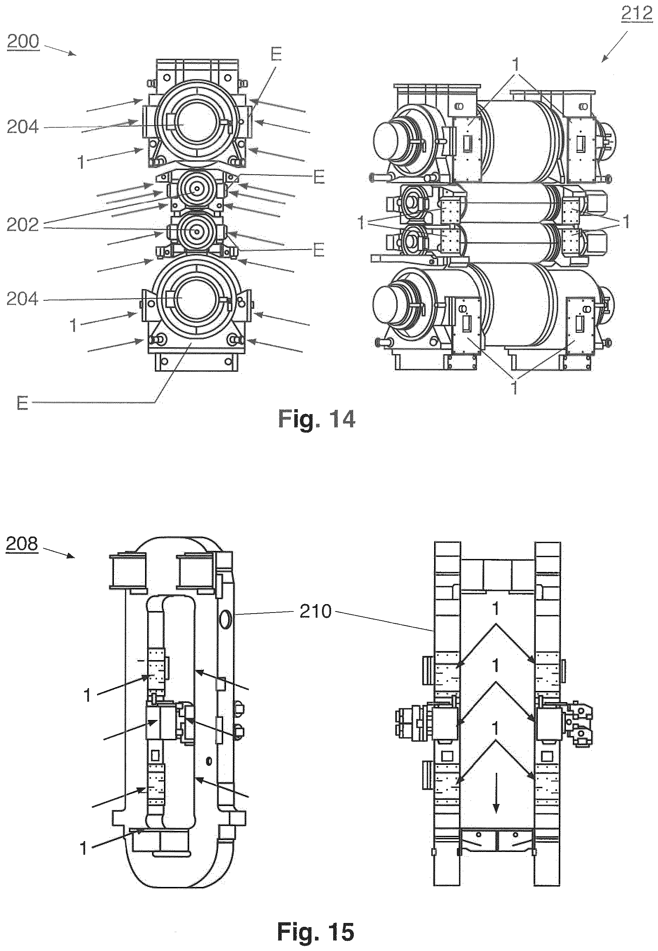

Fig. 14 zeigt ein Walzgerüst 200, mit zwei Arbeitswalzen 202 und zwei Stützwalzen 204 inklusive der zugehörigen Einbaustücke E. Durch die Vielzahl der einzelnen Pfeile, die in Fig. 14 (im linken Bild) jeweils in Richtung des Walzgerüsts gerichtet sind, sind die Positionen veranschaulicht, wo jeweils die Sensorplatten 1 vorgesehen bzw. an den zugeordneten Einbaustücken E angebracht sind.

Das rechte Bild von Fig. 14 zeigt das Walzgerüst 200 in vereinfachter perspektivischer Ansicht, wobei hier ein Walzensatz mit "212" bezeichnet ist. Des Weiteren sind im rechten Bild von Fig. 14 einige der hier vorgesehenen Platten mit "1" angezogen, wobei die an der Rückseite des Walzgerüsts hier nicht zu erkennen sind.

Fig. 15 zeigt einen Walzenständer 208, der für ein Walzgerüst 200 von Fig. 14 vorgesehen ist, jeweils in perspektivischer Ansicht (linkes Bild) und in einer Frontalansicht (rechtes Bild). In gleicher Weise wie bei Fig. 14 sind hier in Fig. 15 durch die Pfeile die Stellen angedeutet, an denen die Platten 1 an den Ständerholmen 210 des Walzenständers 208 befestigt sind.

Bei den Sensorplatten 1, deren Befestigungsstellen in Fig. 14 und Fig. 15 mit den einzelnen Pfeilen angedeutet sind, kann es sich um die Sensorplatten 1 nach einem der Ausführungsformen gemäß der Fig. 1 oder gemäß der Fig. 3-7 handeln.

Das Flussdiagramm von Fig. 16 veranschaulicht einen Ablauf eines erfindungsgemäßen Verfahrens, mit dem die Lage und/oder die Position von Walzen 202, 204 in einem Walzgerüst 200 im Verlauf von dessen Betrieb bestimmt werden können. Dieses Verfahren wird vorzugsweise mit der erfindungsgemäßen Vorrichtung 20 (vgl. Fig. 1) durchgeführt. Zu diesem Verfahren im Einzelnen:
In einem Schritt (i) werden zunächst Signalwerte der Messsensoren 10 einer erfindungsgemäßen Sensorplatte 1 empfangen, vorzugsweise durch die Auswerteeinrichtung A der erfindungsgemäßen Vorrichtung 20. Falls es sich bei der Sensorplatte 1 um eine Ausführungsform nach der Fig. 7 handelt, bei der neben den Messsensoren 10 auch eine Mehrzahl von Verschleißsensoren 121 wie erläutert vorgesehen sind, versteht sich, dass die Mess- bzw. Signalwerte dieser Verschleißsensoren 121 ebenfalls von der Auswerteeinrichtung A empfangen werden können.

Der vorstehend genannte Schritt (i) des erfindungsgemäßen Verfahrens wird sodann für alle Sensorplatten 1 durchgeführt, die an den Einbaustücken E von Walzen 202, 204 in dem Walzgerüst 200 und/oder an den Walzenständer 208 angebracht sind. Durch die Signalwerte des Datenträgers 9, mit dem die einzelnen Sensorplatten 1 jeweils ausgerüstet sind und eine eindeutige Identifikation der Sensorplatten 1 gewährleistet ist, können die an die Auswerteeinrichtung A übertragenen Messwerte jeweils den einzelnen Sensorplatten 1 zugeordnet werden.

Im Anschluss daran werden in einem Schritt (iii) des erfindungsgemäßen Verfahrens alle Signalwerte von dem vorhergehenden Schritt (ii) dahingehend ausgewertet bzw. überprüft, ob an den Sensorplatten 1, die an den Einbaustücken E der Walzen 202, 204 oder an den Walzenständern 208 befestigt sind, in Wechselwirkung mit einem gegenüberliegenden und damit in Kontakt befindlichen Bauteil ein Flächen-, Linien- oder Punktkontakt eingetreten ist. Insbesondere ist mit dem Detektieren eines Linien- oder Punktkontakts ein Rückschluss darauf möglich, dass es zu einem Abheben bzw. Kippen eines Einbaustücks gekommen ist, was eine Lageveränderung der Achse der zugeordneten Walze (Arbeitswalze oder Stützwalze) zur Folge hat. Dank der Matrix-Anordnung der Messsensoren angrenzend zur Gleitlagerfläche 2 kann hierbei auch die Richtung ausgewertet werden, in der ein solches Abheben bzw. Kippen eines Einbaustücks aufgetreten ist. In dieser Weise wird unter Berücksichtigung eines Flächen-, Linien- oder Punktkontakts, der sich an der Gleitlagerfläche der Sensorplatten, die einer bestimmten Walze in einem bestimmten Walzenständer zugeordnet sind, mit einem daran angrenzenden Bauteil einstellen kann, die Position dieser bestimmten Walze und/oder die Ausrichtung der zugehörigen Walzenachse dieser bestimmten Walze relativ zu einem zugeordneten Walzenständer eines Walzgerüsts und/oder zumindest einer anderen Walze im gleichen Walzgerüst und/oder zumindest einer anderen Walze in der gleichen Walzstraße bestimmt.

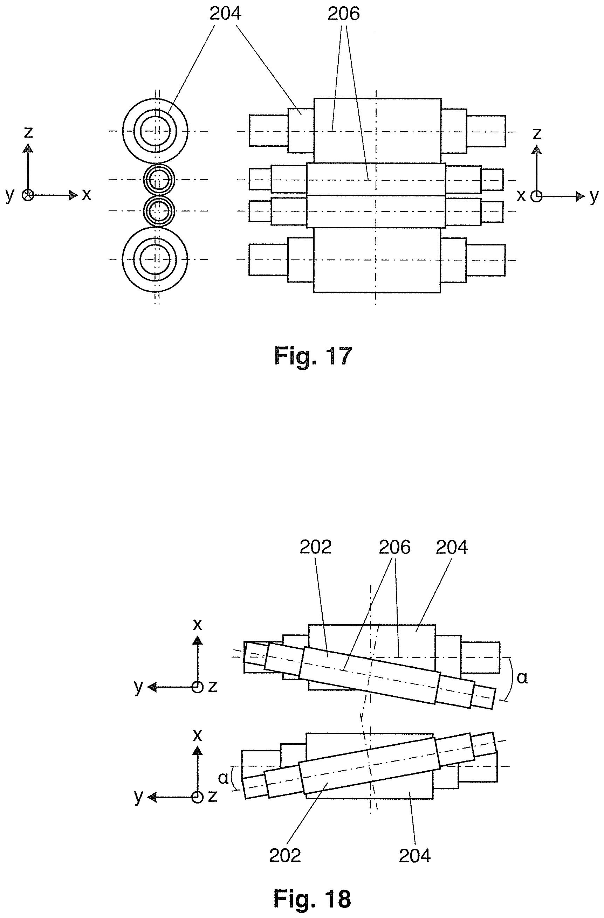

Die Darstellung von Fig. 18 veranschaulicht im Vergleich mit der Fig. 17 exemplarisch das Auftreten eines Schränkens von zwei Walzen. Der Drehpunkt zwischen zwei Walzen kann beliebig zwischen dem Walzenzapfen (oberes Bild von Fig. 18) und dem Zentrum der Walzen (unteres Bild von Fig. 18) liegen. Der Winkel α bezeichnet dabei den Winkel der Achsen zueinander. Jedenfalls ist es mit Hilfe der erfindungsgemäßen Vorrichtung 20 und mit Durchführung des soeben erläuterten erfindungsgemäßen Verfahrens gemäß Fig. 16 möglich, ein solches unerwünschtes Schränken der Achsen frühzeitig zu erkennen und rechtzeitig gegenzusteuern.

Unter Bezugnahme auf die Ausführungsform einer Sensorplatte 1 gemäß Fig. 7, bei der neben den Messsensoren 10 auch eine Mehrzahl von Verschleißsensoren 121 vorgesehen ist, und beim Einsatz der erfindungsgemäßen Vorrichtung 20, mit der solche Sensorplatten 1 gemäß Fig. 7 verwendet werden, lässt sich dank der Verschleißsensoren 121 ergänzend auch der Verschleiß an der Gleitlagerfläche 2 der jeweiligen Sensorplatten 1 feststellen. Die zugehörigen Verfahrensschritte (i) bis (iv) für ein solches Verfahren zum Messen eines Verschleißzustands sind in Fig. 19 gezeigt und bestimmen sich wie folgt:
(i) Bestimmen eines Verschleißzustands an einer Sensorplatte 1, die an einem Einbaustück E einer Walze 202, 294 eines Walzgerüsts 200 befestigt ist, und einer aktuellen Geometrie (Topographie) der zugehörigen Gleitlagerfläche 2,
(ii) Bestimmen eines Verschleißzustands an einer Sensorplatte 1, die an einem Walzenständer 208 eines Walzgerüsts befestigt ist, und einer aktuellen Geometrie (Topographie) der zugehörigen Gleitlagerfläche,
(iii) Durchführen der Schritte (i) und (ii) für alle Sensorplatten 1, die an den Einbaustücken E von Walzen und an den Walzenständern 208 des Walzgerüsts 200 angebracht sind, und
(iv) Übertragen der Messwerte von Schritt (iii) an ein Zentralsystem Z mit einer Speicher- und Auswerteeinheit (5, 6), wobei diese Messwerte jeweils zu einem bestimmten Walzensatz, der aus einer bestimmten Walze, den dafür vorgesehenen Einbaustücken und der daran angebrachten Sensorplatte nach Anspruch 10 besteht, und zu einem bestimmten Walzenständer des Walzgerüsts mit einer Sensorplatte nach Anspruch 11 zugeordnet werden.

Der wesentliche Vorteil des soeben genannten ergänzenden Verfahrens zur Bestimmung des Verschleißzustandes an den Gleitlagerflächen 2 der Sensorplatten 1 liegt u.a. darin, dass der aktuelle Verschleißzustand bzw. die aktuelle Topographie von Sensorplatten für eine Paarung eines bestimmten Walzensatzes und eines bestimmten Walzenständers mit einem ersten vorbestimmten Grenzwert verglichen werden kann, noch während des Walzbetriebs. Falls hierbei dieser erste vorbestimmte Grenzwert überschritten wird, kann zumindest ein Warnsignal zur Veranlassung einer Überprüfung des Walzgerüsts ausgelöst werden. Im Zuge dessen ist auch die Festlegung eines zweiten vorbestimmten Grenzwertes möglich, bei dessen Überschreitung dann zumindest ein Warnsignal für einen Betriebsstopp des Walzgerüsts ausgelöst wird oder ggf. auch automatisch ein Notstopp für die Walzanlage eingeleitet wird.

An dieser Stelle wird nochmals darauf hingewiesen, dass es sich bei dem Merkmal "Walzensatz" handeln kann um:
- eine Einheit gebildet aus Walzen, Einbaustücken und daran befestigter Sensorplatten,
- eine Einheit gebildet aus Arbeits-, Stütz- und Zwischenwalze sowie die zugehörigen Einbaustücke und daran befestigter Sensorplatten, und/oder
- Vielwalzen-Gerüste.

Ebenfalls wird darauf hingewiesen, dass Walzensätze, beispielsweise bei einem Umrüsten eines Walzgerüsts während einer Produktionsunterbrechung, mit neuen bzw. anderen Einbaustücken versehen werden können. Anders ausgedrückt, ist es bei einem Umrüsten möglich, die vorstehend genannten Beispiele von Walzensätzen jeweils neu zusammenzustellen bzw. zu konfigurieren, nämlich durch die Montage von anderen Einbaustücken mit den daran angebrachten Sensorplatten an einer bestimmten Walze.

Die Durchführung des vorstehend genannten Verfahrens und dessen Schritt (iv) empfehlen sich insbesondere dann, wenn ein Betrieb des Walzgerüsts 200 zur Vorbereitung eines Umrüstens gestoppt wird. Im Sinne der vorliegenden Erfindung ist mit einem "Umrüsten" beispielsweise der Austausch von Walzensätzen (z.B. Walzen plus Einbaustücke E inklusive der daran befestigten Sensorplatten 1) gemeint, um geänderte Produktionsbedingungen zu realisieren. Jedenfalls können damit dann Verschleißdaten für den Gleitlagerflächen 2 der einzelnen Sensorplatten 1 generiert werden, die den aktuellen Zustand bzw. "letzten Stand der Dinge" der Sensorplatten 1 vor dem Betriebsstopp darstellen.

Schließlich können unter Berücksichtigung dessen, dass wie soeben erläutert mittels der Verschleißsensoren 121 auch Verschleißdaten in Bezug auf die Gleitlagerflächen 2 der Sensorplatten 1 gewonnen werden können, geeignete Maßnahmen zur Produktionsplanung für zumindest ein Walzgerüst oder für eine Mehrzahl von Walzgerüsten, insbesondere in Form einer Warm- oder Kaltwalzstraße, eines Grobblechgerüstes oder eines Vielwalzen-Gerüstes getroffen werden, nämlich durch die Abfolge von folgenden Schritten:
(i) Bereitstellen von Messwerten in Bezug auf den Verschleißzustand von Sensorplatten 1 und der resultierenden Topographie an deren Gleitlagerflächen 2, welche Messwerte bestimmten Walzensätzen 212 und bestimmten Walzenständern 208 einer Walzstraße zugeordnet sind und in der Speichereinheit 5 des Zentralsystems Z insbesondere mit dem Verfahren nach Anspruch 20 gespeichert worden sind, durch die Auswerteeinheit 6 des Zentralsystems Z (vgl. Fig. 1),
(ii) Auslesen der Messwerte von Schritt (i) durch die Auswerteeinheit 6 des Zentralsystems Z,
(iii) Vergleichen der Topographie bzw. aktuellen Geometrie der Gleitlagerflächen 2 einerseits von bestimmten Einbaustücken E und andererseits von bestimmten Walzenständern 208 eines Walzgerüsts 200, und
(iv) Zuweisen eines bestimmten Walzensatzes, der insbesondere aus einer Walze (202; 204), den dafür vorgesehenen Einbaustücken (E) sowie den daran angebrachten Sensorplatten (1) besteht, zu einem bestimmten Walzenständer in Abhängigkeit von den geplanten neuen Produktionsbedingungen und in Abhängigkeit davon, dass in Schritt (iii) eine Übereinstimmung der Topographie der Gleitlagerflächen einerseits der Sensorplatte eines bestimmten Einbaustücks (E) und andererseits eines bestimmten Walzenständers (208) einer Walzstraße festgestellt worden ist.

In Bezug auf die Schritte (iii) und (iv) des soeben genannten Verfahrens darf erläuternd hervorgehoben werden, dass es im Zuge der Produktionsplanung, wenn ein Walzgerüst mit neuen bzw. anderen Walzen bestückt werden soll, auch möglich ist, Einbaustücke in Verbindung mit den daran angebrachten Sensorplatten von den Walzen zu demontieren. Im Anschluss daran kann geprüft werden, welche Einbaustücke für welchen Typ bzw. welche Größe von Walze geeignet bzw. zulässig sind, wobei sodann, auf Grundlage des Schritts (iii), ermittelt wird, ob für ein solch zulässiges Einbaustück E und die daran befestigte Sensorplatte 1 auch ein passender "matching partner" in Form einer an einem Walzenständer 208 befestigten anderen Sensorplatte 1 existiert, sofern die Gleitlagerflächen der jeweiligen Sensorplatten mit ihren (Verschleiß)Topographien zueinander passen. Falls sich solche "matching partner" in Bezug auf die Sensorplatten 1 finden, dann kann ein Einbaustück mit der daran angebrachten passenden Sensorplatte an der geplanten Walze montiert und zu einem Walzensatz komplettiert werden, der dann gemäß Schritt (iv) des hier zur Diskussion stehenden Verfahrens zu einem bestimmten Walzenständer mit der daran passenden Sensorplatte zugewiesen wird.

Der Schritt (iv) des soeben genannten Verfahrens bzw. der Schrittabfolge für die Produktionsplanung wird mit dem Ziel durchgeführt, durch die definierten Paarungen von Walzenständern und Walzensätzen, bezüglich derer die Topographie der Gleitlagerflächen 2 der zugehörigen Sensorplatten 1 übereinstimmen, möglichst optimale Produktionsbedingungen herzustellen bzw. zu erreichen. Falls es gelingt, zueinander passende Paarungen von Walzenständern und Walzensätzen aufzufinden, kann zum einen ein ansonsten kostspieliges Überarbeiten oder gar Austauschen von Sensorplatten 1 zumindest aufgeschoben werden. Zum anderen werden so bestmögliche Produktionsbedingungen durch den Einsatz der genannten "matching-partner" geschaffen.

### Bezugszeichenliste

- 1: Sensorplatte
- 2: Gleitlagerfläche (= Verschleißfläche)
- 3: Rückseite (der Sensorplatte 1)
- 4: seitliche Randfläche (der Sensorplatte 1)
- 5: Speichereinheit
- 6: Auswerteeinheit
- 7: maschinenlesbarer Datenspeicher
- 8: Sendeeinheit
- 9: Datenträger mit maschinenlesbarer Kennung, zur eindeutigen Identifikation einer Sensorplatte 1
- 10: Messsensor(en)
- 11: Sacklochbohrung
- 12: DMS-Element
- 20: Vorrichtung zum Bestimmen der Lage und/oder der Position einer Walze in einem Walzgerüst
- 120: Messeinrichtung
- 121: Verschleißsensor(en)
- 122: elektrische(r) Leiter
- 128: Energiequelle
- 200: Walzgerüst
- 202: Arbeitswalze(n)
- 204: Stützwalze(n)
- 206: Walzenachse
- 208: Walzenständer
- 210: Ständerholm
- 212: Walzensatz
- a, b: ganzzahlige Parameter aus dem Bereich {1-100}
- m, n: ganzzahlige Parameter aus dem Bereich {1-100}
- A: Auswerteeinrichtung
- E: Einbaustück
- K: Kommunikationsmodul
- S: Signalstrecke
- V₁: erste Verschleißgrenze
- V₂: zweite Verschleißgrenze
- Z: Zentralsystem
- α: (möglicher) Winkel zwischen zwei Walzenachsen 206

## Patentansprüche

1. Sensorplatte (1), die als Gleitlager- oder Führungselement für Walzgerüste (200) dient, umfassend mindestens eine mit einem Bauteil in Kontakt bringbare und in einem Betrieb eines Walzgerüsts (200) einem Verschleiß unterliegende Gleitlagerfläche (2) und zumindest einen Messsensor (10), **gekennzeichnet durch** eine Mehrzahl von Messsensoren (10), die in Form einer (a x b)-Matrix angrenzend zur Gleitlagerfläche (2) angeordnet sind, derart, dass die Messsensoren (10) einerseits nicht dem Verschleiß an der Gleitlagerfläche (2) unterworfen sind und andererseits in der Lage sind, die auf die Sensorplatte (1) wirkenden Kräfte und/oder Dehnungen und/oder Verformungen, die in Folge eines Flächen-, Linien- oder Punktkontakts der Sensorplatte (1) mit dem Bauteil entstehen, zu erfassen.

2. Sensorplatte (1) nach Anspruch 1, **dadurch gekennzeichnet, dass** die Messsensoren (10) in die Sensorplatte (1) integriert aufgenommen sind.

3. Sensorplatte (1) nach Anspruch 2, **dadurch gekennzeichnet, dass** in der Sensorplatte (1) eine Mehrzahl von Sacklochbohrungen (11) ausgebildet sind, die in die Sensorplatte (1) von einer der Gleitlagerfläche (2) entgegengesetzten Rückseite (3) her und/oder von einer seitlichen Randfläche (4) her eingebracht sind, wobei die Messsensoren (10) in den jeweiligen Sacklochbohrungen (11) eingesetzt sind.

4. Sensorplatte (1) nach einem der vorhergehenden Ansprüche, **gekennzeichnet durch** mindestens einen in die Gleitlagerfläche (2) integrierten Verschleißsensor (121) zum Erfassen eines Materialabtrags an der Gleitlagerfläche (2), wobei dieser Verschleißsensor (121) einen elektrischen Widerstand umfasst, der aus mindestens einem elektrischen Leiter (122) gebildet ist, welcher vorzugsweise abschnittsweise parallel zu der Gleitlagerfläche (2) verlaufend angeordnet ist, wobei der Verschleißsensor (121) bei einem Materialabtrag an der Gleitlagerfläche (2) selber mechanisch mit abgetragen wird, vorzugsweise, dass in die Gleitlagerfläche (2) eine Mehrzahl von solchen Verschleißsensoren (121) integriert sind, weiter vorzugsweise, dass diese Mehrzahl von Verschleißsensoren (121) in Form einer (m x n)-Matrix angeordnet sind, weiter vorzugsweise, dass der elektrische Widerstand eines Verschleißsensors (121) aus einer Mehrzahl elektrischer Leiter (122) gebildet ist, welche vorzugsweise zumindest abschnittsweise parallel und in unterschiedlichen Tiefen in Bezug auf die Gleitlagerfläche (2) angeordnet sind.

5. Sensorplatte (1) nach einem der vorhergehenden Ansprüche, **dadurch gekennzeichnet, dass** die Parameter a und b, mit denen die (a x b)-Matrix für die Anordnung der Messsensoren (10) gebildet ist, und die Parameter m und n, mit denen die (m x n)-Matrix für die Anordnung der Verschleißsensoren (121) gebildet ist, jeweils aus ganzzahligen Werten bestehen, derart, dass damit die Matrix-Anordnung der Messsensoren (10) bzw. Verschleißsensoren (121) an die Umfangskontur der Sensorplatte (1) angepasst ist.

6. Sensorplatte (1) nach einem der vorhergehenden Ansprüche, **dadurch gekennzeichnet, dass** die Parameter a und b, mit denen die (a x b)-Matrix für die Anordnung der Messsensoren (10) gebildet ist, und die Parameter m und n, mit denen die (m x n)-Matrix für die Anordnung der Verschleißsensoren (121) gebildet ist, jeweils aus ganzzahligen Werten bestehen, die aus dem Zahlenbereich {1-100}, vorzugsweise aus dem Zahlenbereich {1-50}, weiter vorzugsweise aus dem Zahlenbereich {1-20} gewählt sind, vorzugsweise, dass die Messsensoren (10) bzw. Verschleißsensoren (121) in Form einer 2 x 2-Matrix, in Form einer 3 x 2-Matrix, in Form einer 3 x 1-Matrix, in Form einer 3 x 3-Matrix, in Form einer 4 x 4-Matrix, in Form einer 5 x 5-Matrix, in Form einer 6 × 6-Matrix, in Form einer 6 × 4-Matrix, in Form einer 7 × 7-Matrix, in Form einer 8 × 8-Matrix, in Form einer 9 × 9-Matrix, in Form einer 10 × 10-Matrix, in Form einer 11 × 11-Matrix oder in Form einer 12 × 12-Matrix angeordnet sind.

7. Sensorplatte (1) nach einem der vorhergehenden Ansprüche, **gekennzeichnet durch** zumindest einen maschinenlesbaren Datenspeicher (7), in dem Signal- bzw. Messwerte der Messsensoren (10) speicherbar sind.

8. Sensorplatte (1) nach einem der vorhergehenden Ansprüche, **dadurch gekennzeichnet, dass** eine mit den Messsensoren (10) in Signalverbindung stehende Sendeeinheit (8) vorgesehen ist, mittels der die Messwerte der Messsensoren (10) über eine Funkstrecke oder kabelgebunden an eine Auswerteeinrichtung (A) übertragbar sind.

9. Sensorplatte (1) nach einem der vorhergehenden Ansprüche, **gekennzeichnet durch** einen Datenträger (9) mit einer maschinenlesbaren Kennung, mittels der die Sensorplatte (1) eindeutig identifizierbar ist, vorzugsweise, dass der Datenträger (9) aus einem RFID-Transponder, aus einem NFC (Near-Field-Communication)-Element und/oder aus einem QR-Code gebildet ist.

10. Sensorplatte (1) nach einem der vorhergehenden Ansprüche, **dadurch gekennzeichnet, dass** sie an einem Einbaustück (E) einer Walze eines Walzgerüsts (200) befestigt ist.

11. Sensorplatte (1) nach einem der Ansprüche 1 bis 9, **dadurch gekennzeichnet, dass** sie an einem Walzenständer (208) eines Walzgerüsts (200) befestigt ist.

12. Vorrichtung (20) zum Bestimmen der Lage und/oder der Position einer Walze (202; 204) in einem Walzgerüst (200), umfassend eine mit den Messsensoren (10) einer Sensorplatte (1) nach einem der Ansprüche 1 bis 11 in Signalverbindung stehende Auswerteeinrichtung (A), von der die Signalwerte der einzelnen Messsensoren (10) empfangbar sind, wobei die Auswerteeinrichtung (A) programmtechnisch derart eingerichtet ist, dass unter Berücksichtigung eines Flächen-, Linien- oder Punktkontakts, der sich an der Gleitlagerfläche (2) der Sensorplatte (1) mit einem daran angrenzenden Bauteil einstellt, die Position einer Walze, welcher diese Sensorplatte (1) zugeordnet ist, und/oder die Ausrichtung der zugehörigen Walzenachse (206) dieser Walze relativ zu einem zugeordneten Walzenständer (208) eines Walzgerüsts (200) und/oder zumindest einer anderen Walze (202; 204) im gleichen Walzgerüst (200) und/oder zumindest einer anderen Walze in der gleichen Walzstraße bestimmbar ist.

13. Vorrichtung (20) nach Anspruch 12, **gekennzeichnet durch** ein mit der Auswerteeinrichtung (A) in Signalverbindung stehendes Zentralsystem (Z) mit einer Speichereinheit (5) und Auswerteeinheit (6), wobei die Daten der Auswerteeinrichtung (A) an das Zentralsystem (Z) über eine Signalstrecke (S) übertragbar und darin auswertbar sind, vorzugsweise, dass die Auswerteeinrichtung (A) mit einem Kommunikationsmodul (K) ausgestattet ist, mit dem für die Auswerteeinrichtung (A) ein Datenaustausch mit dem Zentralsystem (Z) und/oder mit externen Kommunikationspartnern möglich ist.

14. Vorrichtung (20) nach Anspruch 13, **dadurch gekennzeichnet, dass** die Auswerteeinheit (6) des Zentralsystems (Z) programmtechnisch derart eingerichtet ist, dass die Lage aller Walzenachsen (206) in einer Walzstraße bestimmbar und miteinander in Relation bringbar bzw. miteinander vergleichbar sind, vorzugsweise, dass mittels der Auswerteeinheit (6) ein Warnsignal erzeugbar ist, falls die Ausrichtung bzw. Lage der Walzenachsen (206) von vorbestimmten Grenzwerten abweichend sind.

15. Vorrichtung (20) nach einem der Ansprüche 12 bis 14, soweit hiermit die Signalwerte der Verschleißsensoren (121) einer Sensorplatte (1) auch nach Anspruch 4 empfangbar sind, wobei die Auswerteeinrichtung (A) programmtechnisch derart eingerichtet ist, dass damit eine Änderung, insbesondere einer Erhöhung, des Ohm'schen Widerstandswertes des elektrischen Leiters (122) eines bestimmten Verschleißsensors (121) in Abhängigkeit seines eigenen Materialabtrags erfassbar ist, um hierdurch einen Rückschluss von der erkannten Änderung des Widerstandwertes auf die Größe des Materialabtrags an der Gleitlagerfläche (2) und/oder auf die verbleibende Dicke der Gleitlagerfläche (2) an der Stelle dieses bestimmten Verschleißsensors (121) zu gewährleisten.

16. Vorrichtung (20) nach einem der Ansprüche 12 bis 15, **dadurch gekennzeichnet, dass** die Auswerteeinrichtung (A) mit einer Energiequelle (128) ausgerüstet ist, wobei die Auswerteeinrichtung (A) zumindest mit den Sensoren und insbesondere den Verschleißsensoren (121) derart verbunden ist, dass die Verschleißsensoren (121) über die Energiequelle (128) mit Energie versorgt werden, vorzugsweise, dass die Energiequelle (128) weitere elektrische Bauelemente (7; 8; 9), die an einer Sensorplatte (1) nach einem der Ansprüche 7 bis 9 vorgesehen oder daran angebracht sind, mit Energie versorgt.

17. Vorrichtung (20) nach Anspruch 16, **dadurch gekennzeichnet, dass** die Energiequelle (128) in Form einer Energy-Harvesting-Einheit ausgebildet ist, vorzugsweise, dass die Energy-Harvesting-Einheit Energie thermisch und/oder mechanisch gewinnt.

18. Verfahren zum Bestimmen der Lage und/oder der Position von zumindest einer Walze in einem Walzgerüst (200) im Verlauf von dessen Betrieb, bei dem eine mit den Messsensoren (10) einer Sensorplatte (1) nach einem der Ansprüche 1 bis 11 in Signalverbindung stehende Auswerteeinrichtung (A) eingesetzt wird, mit den Schritten:
(i) Empfangen der Signalwerte der Messsensoren (10) einer Sensorplatte (1) nach Anspruch 10 und/oder einer Sensorplatte (1) nach Anspruch 11 durch die Auswerteeinrichtung (A),
(ii) Durchführen des Schritts (i) für alle Sensorplatten (1), die an den Einbaustücken (E) von Walzen in dem Walzgerüst (200) und/oder an den Walzenständern (208) des Walzgerüsts (200) und/oder an zumindest einer anderen Walze der gleichen Walzstraße angebracht sind, und
(iii) Auswerten aller Signalwerte von Schritt (ii) dahingehend, dass unter Berücksichtigung eines Flächen-, Linien- oder Punktkontakts, der sich an der Gleitlagerfläche (2) der Sensorplatten (1), die einer bestimmten Walze (202; 204) in einem bestimmten Walzenständer (208) zugeordnet sind, mit einem daran angrenzenden Bauteil einstellt, die Position dieser bestimmten Walze (202; 204) und/oder die Ausrichtung der zugehörigen Walzenachse (206) dieser bestimmten Walze relativ zu einem zugeordneten Walzenständer (208) eines Walzgerüsts (200) und/oder zumindest einer anderen Walze im gleichen Walzgerüst (200) und/oder zumindest einer anderen Walze in der gleichen Walzstraße bestimmt wird.

19. Verfahren nach Anspruch 18, **dadurch gekennzeichnet, dass** in Schritt (iii) die Signalwerte von allen Sensorplatten (1) für einen bestimmten Walzenständer (208) ausgewertet werden, so dass damit die Lager aller Walzenachsen (206) in diesem bestimmten Walzenständer (208) bekannt ist.

20. Verfahren nach Anspruch 18 oder 19, **dadurch gekennzeichnet, dass** im Zuge der Auswertung von Schritt (iii) die Signalwerte von zwei benachbarten Walzen, insbesondere von zwei benachbarten Arbeitswalzen (202) und/oder von einer Stützwalze (204) und einer hierzu benachbarten Arbeitswalze (202) eines Walzgerüsts (200), und/oder von je zwei zueinander benachbarten Walzenpaaren und/oder von einem Satz Arbeitsund Stützwalzen und/oder von einem Satz Arbeits-, Zwischen- und Stützwalzen dahingehend überprüft werden, ob die Achsen (208) dieser Walzen (202; 204) zueinander parallel ausgerichtet sind oder zwischen sich einen Winkel (α) einschließen, vorzugsweise, dass im Zuge der Auswertung von Schritt (iii) des Anspruchs 18 die Lage bzw. Position von allen Walzenachsen in einer Walzstraße zueinander in Relation gesetzt werden.

21. Verfahren nach einem der Ansprüche 18 bis 20, **dadurch gekennzeichnet, dass** dabei eine Vorrichtung (20) nach einem der Ansprüche 12 bis 17 eingesetzt wird.

22. Verfahren zum Messen eines Verschleißzustands von Gleitlager- oder Führungselementen im Betrieb eines Walzgerüsts (200), bei dem Vorrichtung (20) nach Anspruch 15 eingesetzt wird, mit den Schritten:
(i) Bestimmen eines Verschleißzustands an einer Sensorplatte (1) nach Anspruch 10 und einer aktuellen Geometrie (Topographie) der zugehörigen Gleitlagerfläche (2),
(ii) Bestimmen eines Verschleißzustands an einer Sensorplatte (1) nach Anspruch 11 und einer aktuellen Geometrie (Topographie) der zugehörigen Gleitlagerfläche (2),
(iii) Durchführen der Schritte (i) und (ii) für alle Sensorplatten (1), die an den Einbaustücken (E) von Walzen und an den Walzenständern (208) des Walzgerüsts (200) angebracht sind,
(iv) Übertragen der Messwerte von Schritt (iii) an ein Zentralsystem (Z) mit einer Speicher- und Auswerteeinheit (6), wobei diese Messwerte jeweils zu einem bestimmten Walzensatz (212), der aus einer bestimmten Walze, den dafür vorgesehenen Einbaustücken (E) und der daran angebrachten Sensorplatte (1) nach Anspruch 10 besteht, und zu einem bestimmten Walzenständer (208) des Walzgerüsts (200) mit einer Sensorplatte (1) nach Anspruch 11 zugeordnet werden.

23. Verfahren nach Anspruch 22, **dadurch gekennzeichnet, dass** der Schritt (iv) durchgeführt wird, bevor der Betrieb des Walzgerüsts (200) zur Vorbereitung eines Umrüstens gestoppt wird.

24. Verfahren nach Anspruch 22 oder 23, **dadurch gekennzeichnet, dass** der aktuelle Verschleißzustand bzw. die aktuelle Topographie von Sensorplatten (1) für eine Paarung eines bestimmten Walzensatzes (212) und eines bestimmten Walzenständers (208) mit einem ersten vorbestimmten Grenzwert verglichen wird, wobei bei Überschreiten dieses ersten vorbestimmten Grenzwerts zumindest ein Warnsignal zur Veranlassung einer Überprüfung des Walzgerüsts (200) ausgelöst wird, vorzugsweise, dass bei Überschreiten eines zweiten vorbestimmten Grenzwerts ein Warnsignal für einen Betriebsstopp des Walzgerüsts (200) ausgelöst wird.

25. Verfahren zur Produktionsplanung für zumindest ein Walzgerüst (200) oder für eine Mehrzahl von Walzgerüsten (200), insbesondere in Form von Grobblechgerüsten, Vielwalzen-Gerüsten oder einer Warm- oder Kaltwalzstraße, einem, mit den Schritten:
(i) Bereitstellen von Messwerten in Bezug auf den Verschleißzustand von Sensorplatten (1) nach einem der Ansprüche 1 bis 11 und der resultierenden Topographie an deren Gleitlagerflächen (2), welche Messwerte bestimmten Walzensätzen (212) und bestimmten Walzenständern (208) einer Walzstraße zugeordnet sind und in der Speichereinheit (5) eines Zentralsystems (Z) insbesondere mit dem Verfahren nach Anspruch 20 gespeichert worden sind, durch eine Auswerteeinheit (6) des Zentralsystems (Z),
(ii) Auslesen der Messwerte von Schritt (i) durch eine Auswerteeinheit (6) des Zentralsystems (Z),
(iii) Vergleichen der Topographie bzw. aktuellen Geometrie der Gleitlagerflächen (2) einerseits von bestimmten Walzensätzen und andererseits von bestimmten Walzenständern (208) eines Walzgerüsts (200), und
(iv) Zuweisen eines bestimmten Walzensatzes (212), der insbesondere aus einer Walze (202; 204), den dafür vorgesehenen Einbaustücken (E) sowie den daran angebrachten Sensorplatten (1) besteht, zu einem bestimmten Walzenständer (208) in Abhängigkeit von den geplanten neuen Produktionsbedingungen und in Abhängigkeit davon, dass in Schritt (iii) eine Übereinstimmung der Topographie der Gleitlagerflächen (2) einerseits der Sensorplatte (1) eines bestimmten Einbaustücks (E) und andererseits eines bestimmten Walzenständers (208) einer Walzstraße festgestellt worden ist.

## Claims

1. Sensor plate (1), which serves as slide bearing element or guide element for roll stands (200), comprising at least one slide bearing surface (2), which can be brought into contact with a component and which in operation of a roll stand (200) is subject to wear, and at least one measuring sensor (10),
**characterised by** a plurality of measuring sensors (10) which are so arranged in the form of an (a x b) matrix adjoining the slide bearing surface (2) that the measuring sensors (10) on the one hand are not subject to the wear at the slide bearing surface (2) and on the other hand are in a position of detecting forces acting on the sensor plate (1) and/or stretchings and/or deformations, which arise as a consequence of an areal, lineal or punctiform contact of the sensor plate (1) with the component.

2. Sensor plate (1) according to claim 1, **characterised in that** the measuring sensors (10) are mounted to be integrated in the sensor plate (1).

3. Sensor plate (1) according to claim 2, **characterised in that** a plurality of blind bores (11) is formed in the sensor plate (1), the bores being formed in the sensor plate (1) from a rear side (3) opposite the slide bearing surface (2) and/or from a lateral edge surface (4), wherein the measuring sensors (10) are inserted into the respective blind bores (11).

4. Sensor plate (1) according to any one of the preceding claims, **characterised by** at least one wear sensor (121), which is integrated in the slide bearing surface (2), for detection of material removal at the slide bearing surface (2), wherein this wear sensor (121) comprises an electrical resistance formed from at least one electrical conductor (122), which is preferably arranged to extend sectionally parallel to the slide bearing surface (2), wherein the wear sensor (121) in the case of material removal at the slide bearing surface (2) is itself mechanically worn down, preferably in that a plurality of such wear sensors (121) is integrated in the slide bearing surface (2), more preferably that this plurality of wear sensors (121) is arranged in the form of an (m x n) matrix, further preferably that the electrical resistance of a wear sensor (121) is formed from a plurality of electrical conductors (122) which are preferably arranged at least sectionally parallel and at different depths with respect to the slide bearing surface (2).

5. Sensor plate (1) according to any one of the preceding claims, **characterised in that** the parameters a and b by which the (a × b) matrix for the arrangement of the measuring sensors (10) is formed and the parameters m and n by which the (m × n) matrix for the arrangement of the wear sensors (121) is formed each consist of whole-number values in such a way that the matrix arrangement of the measuring sensors (10) and wear sensors (121), respectively, is thereby adapted to the circumferential profile of the sensor plate (1).

6. Sensor plate (1) according to any one of the preceding claims, **characterised in that** the parameters a and b by which the (a x b) matrix for the arrangement of the measuring sensors (10) is formed and the parameters m and n by which the (m x n) matrix for the arrangement of the wear sensors (121) is formed each consist of whole-number values, which are selected from the number range {1 - 100}, preferably from the number range {1 - 50}, more preferably from the number range {1 - 20}, preferably **in that** the measurement sensors (10) or wear sensors (121) are arranged in the form of a 2 × 2 matrix, in the form of a 3 × 2 matrix, in the form of a 3 × 1 matrix, in the form of a 3 × 3 matrix, in the form of a 4 × 4 matrix, in the form of a 5 × 5 matrix, in the form of a 6 × 6 matrix, in the form of a 6 × 4 matrix, in the form of a 7 × 7 matrix, in the form of an 8 × 8 matrix, in the form of a 9 × 9 matrix, in the form of a 10 × 10 matrix, in the form of an 11 × 11 matrix or in the form of a 12 × 12 matrix.

7. Sensor plate (1) according to any one of the preceding claims, **characterised by** at least one machine-readable data memory (7) in which the signal values or measurement values of the measuring sensors (10) can be stored.

8. Sensor plate (1) according to any one of the preceding claims, **characterised in that** a transmitting unit (8), which is in signal connection with the measuring sensors (10) and by means of which the measurement values of the measuring sensors (10) are transmissible to an evaluating device (A) by way of a radio link or by cable, is provided.

9. Sensor plate (1) according to any one of the preceding claims, **characterised by** a data carrier (9) with a machine-readable identification by means of which the sensor plate (1) is uniquely identifiable, preferably in that the data carrier (9) is formed by an RFID transponder, by an NFC (Near Field Communication) element and/or by a QR code.

10. Sensor plate (1) according to any one of the preceding claims, **characterised in that** it is attached to a chock (E) of a roll of a roll stand (200).

11. Sensor plate (1) according to any one of claims 1 to 9, **characterised in that** it is attached to a roll housing (208) of a roll stand (200).

12. Device (20) for determining the location and/or the position of a roll (202; 204) in a roll stand (200), comprising
an evaluating device (A) which is in signal connection with the measuring sensors (10) of a sensor plate (1) according to any one of claims 1 to 11 and by which the signal values of the individual measuring sensors (10) are receivable, wherein the evaluating device (A) is so arranged in terms of program that with consideration of an areal, lineal or punctiform contact arising at the slide bearing surface (2) of the sensor plate (1) with a component adjoining thereto the position of a roll associated with this sensor plate (1) and/or the orientation of the respective roll axis (206) of this roll relative to an associated roll housing (208) of a roll stand (200) and/or at least one other roll (202; 204) in the same roll stand (200) and/or at least one other roll in the same rolling train is or are determinable.

13. Device (20) according to claim 12, **characterised by** a central system (Z), which is in signal connection with the evaluating device (A), with a memory unit (5) and an evaluating unit (6), wherein the data of the evaluating device (A) are transmissible to the central system (Z) by way of a signal path (S) and evaluatable therein, preferably in that the evaluating device (A) is equipped with a communications module (K) by which a data exchange with the central system (Z) and/or with external communication partners is possible for the evaluating device (A).

14. Device (20) according to claim 13, **characterised in that** the evaluating unit (6) of the central system (Z) is so arranged in terms of program that the locations of all roll axes (206) in a rolling train are determinable and can be brought into relationship or compared with one another, preferably **in that** a warning signal can be generated by means of the evaluating unit (6) if the orientation or location of the roll axes (206) is different from predetermined limit values.

15. Device (20) according to any one of claims 12 to 14, insofar as the signal values of the wear sensors (121) of a sensor plate (1) are also thereby receivable according to claim 4, wherein the evaluating device (A) is so arranged in terms of program that a change, particularly an increase, in the resistance impedance of the electrical conductor (122) of a specific wear sensor (121) is detectable thereby in dependence on its individual material removal so as to thereby ensure a conclusion - from the recognised change in the resistance value - about the amount of material removal at the slide bearing surface (2) and/or about the residual thickness of the slide bearing surface (2) at the place of this specific wear sensor (121).

16. Device (20) according to any one of claims 12 to 15, **characterised in that** the evaluating device (A) is equipped with an energy source (128), wherein the evaluating device (A) is connected at least with the sensors and, in particular, the wear sensors (121) in such a way that the wear sensors (121) are supplied with energy by way of the energy source (128), preferably **in that** the energy source (128) supplies further electrical components (7; 8; 9), which are provided at a sensor plate (1) according to any one of claims 7 to 9 or mounted thereon, with energy.

17. Device (20) according to claim 16, **characterised in that** the energy source (128) is constructed in the form of an energy-harvesting unit, preferably **in that** the energy-harvesting unit recovers energy thermally and/or mechanically.

18. Method of determining the location and/or the position of at least one roll in a roll stand (200) in the course of operation thereof, in which an evaluating device (A) in signal connection with the measuring sensors (10) of a sensor plate (1) according to any one of claims 1 to 11 is used, comprising the steps of:
(i) receiving the signal values of the measuring sensors (10) of a sensor plate (1) according to claim 10 and/or a sensor plate (1) according to claim 11 by the evaluating device (A),
(ii) carrying out the step (i) for all sensors plates (1) which are mounted on the chocks (E) of rolls in the roll stand (200) and/or on the roll housings (208) of the roll stand (200) and/or on at least one other roll of the same rolling train, and
(iii) evaluating all signal values of step (ii) in such a way that with consideration of an areal, lineal or punctiform contact, which arises at the slide bearing surface (2) of the sensor plates (1) associated with a specific roll (202; 204) in a specific roll housing (208), with a component adjoining thereto the position of this specific roll (202; 204) and/or the orientation of the associated roll axis (206) of this specific roll relative to an associated roll housing (208) of a roll stand (200) and/or at least one other roll in the same roll stand (200) and/or at least one other roll in the same rolling train is or are determined.

19. Method according to claim 18, **characterised in that** in step (iii) the signal values of all sensor plates (1) for a specific roll housing (208) are evaluated so that the location of all roll axes (206) in this specific roll housing (208) is thereby known.

20. Method according to claim 18 or 19, **characterised in that** in the course of evaluation of step (iii) the signal values of two adjacent rolls, particularly of two adjacent work rolls (202), and/or of a backing roll (204) and a work roll (202), which is adjacent thereto, of a roll stand (200) and/or of a respective two mutually adjacent roll pairs and/or of a set of work rolls and backing rolls and/or a set of work rolls, intermediate rolls and backing rolls are checked with regard to whether to the axes (208) of these rolls (202; 204) are oriented parallelly to one another or include an angle (α) therebetween, preferably **in that** in the course of the evaluation of step (iii) of claim 18 the location or position or all roll axes in a rolling train is placed in relationship to one another.

21. Method according to any one of claims 18 to 20, **characterised in that in that** case a device (20) according to any one of claims 12 to 17 is used.

22. Method of measuring a wear state of slide bearing elements or guide elements in operation of a roll stand (200), in which a device (20) according to claim 15 is used, comprising the steps of:
(i) determining a wear state at a sensor plate (1) according to claim 10 and a current geometry (topography) of the associated slide bearing surface (2),
(ii) determining a wear state at a sensor plate (1) according to claim 11 and a current geometry (topography) of the associated slide bearing surface (2),
(iii) carrying out steps (i) and (ii) for all sensor plates (1) mounted on the chocks (E) of rolls and on the roll housings (208) of the roll stand (200),
(iv) transmitting the measurement values of step (iii) to a central system (Z) with a memory and evaluating unit (6), wherein these measurement values are respectively associated with a specific roll set (212), which consists of a specific roll, the chocks (E) provided for that and the sensor plate (1) mounted thereon, according to claim 10, and with a specific roll housing (208) of the roll stand (200) with a sensor plate (1) according to claim 11.

23. Method according to claim 22, **characterised in that** the step (iv) is carried out before operation of the roll stand (200) is stopped for preparation of re-equipping.

24. Method according to claim 22 or 23, **characterised in that** the current wear state or the current topography of sensor plates (1) for a pairing of a specific roll set (212) and a specific roll housing (208) is compared with a first predetermined limit value, wherein if this first predetermined limit value is exceeded at least one warning signal for initiating a check of the roll stand (200) is triggered, preferably **in that** when a second predetermined limit value is exceeded a warning signal for stopping operation of the roll stand (200) is triggered.

25. Method for production planning for at least one roll stand (200) or for a plurality of roll stands (200), particularly in the form of heavy-plate stands, multi-roll stands or a hotrolling or cold-rolling train, comprising the steps of:
(i) providing measurement values with respect to the wear state of sensor plates (1) according to any one of claims 1 to 11 and the resulting topography at the slide bearing surfaces (2) thereof, with which measurement values specific roll sets (212) and specific roll housings (208) of a rolling train are associated and have been stored in the memory unit (5) of a central system (Z), particularly by the method according to claim 20, by an evaluating unit (6) of the central system (Z),
(ii) reading out the measurement values of step (i) by an evaluating unit (6) of the central system (Z),
(iii) comparing the topography or current geometry of the slide bearing surfaces (2) on the one hand of specific roll sets and on the other hand of specific roll housings (208) of a roll stand (200), and
(iv) allocating a specific roll set (212), which consists particularly of a roll (202; 204), the chocks (E) provided for that and the sensor plates (1) mounted thereon, to a specific roll housing (208) in dependence on the planned new production conditions and in dependence on whether in step (iii) a correspondence of the topography of the slide bearing surfaces (2) on the one hand of the sensor plate (1) of a specific chock (E) and on the other hand of a specific roll housing (208) of a rolling train was ascertained.

## Revendications

1. Plaque faisant office de capteur (1) qui sert d'élément de guidage ou d'élément sous la forme d'un palier à glissement destiné à des cages de laminoirs (200), qui comprend au moins une surface de palier à glissement (2) qui peut être amenée en contact avec un composant et qui, au cours d'une mise en service d'une cage de laminoir (200), est soumise à l'usure, et au moins un capteur de mesure (10), **caractérisée par** une multitude de capteurs de mesure (10) qui sont disposés sous la forme d'une matrice (a x b) en position adjacente à la surface (2) du palier à glissement, d'une manière telle que les capteurs de mesure (10) d'une part ne sont pas soumis à l'usure contre la surface (2) du palier à glissement et d'autre part sont en mesure d'enregistrer les forces et/ou les allongements et/ou les déformations qui s'exercent sur la plaque faisant office de capteur (1), qui apparaissent du fait d'un contact superficiel, linéaire ou ponctuel de la plaque faisant office de capteur (1) avec le composant.

2. Plaque faisant office de capteur (1) selon la revendication 1, **caractérisée en ce que** les capteurs de mesure (10) sont logés d'une manière intégrée dans la plaque faisant office de capteur (1).

3. Plaque faisant office de capteur (1) selon la revendication 2, **caractérisée en ce que**, dans la plaque faisant office de capteur (1), sont réalisés une multitude d'alésages borgnes (11) qui sont incorporés dans la plaque faisant office de capteur (1) à partir d'un côté arrière (3) qui est opposé à la surface (2) du palier à glissement et/ou à partir d'une surface marginale latérale (4) ; dans laquelle les capteurs de mesure (10) sont insérés dans les alésages borgnes respectifs (11).

4. Plaque faisant office de capteur (1) selon l'une quelconque des revendications précédentes, **caractérisée par** au moins un capteur de l'usure (121) qui est intégré dans la surface (2) du palier à glissement, qui est destiné à l'enregistrement d'un enlèvement de matière en ce qui concerne la surface (2) du palier à glissement ; dans laquelle ce capteur de l'usure (121) comprend une résistance électrique qui est constituée par au moins un conducteur électrique (122) qui est disposé de manière à s'étendre, de préférence par tronçons, parallèlement à la surface (2) du palier à glissement ; dans laquelle le capteur de l'usure (121) fait l'objet lui-même d'un enlèvement par voie mécanique dans le cas d'un enlèvement de matière en ce qui concerne la surface (2) du palier à glissement ; de préférence d'une manière telle que, dans la surface (2) du palier à glissement, sont intégrés une multitude de capteurs de l'usure (121) de ce type ; de façon plus préférée, d'une manière telle que cette multitude de capteurs (121) de l'usure sont disposés sous la forme d'une matrice (m x n) ; de façon encore plus préférée, d'une manière telle que la résistance électrique d'un capteur (121) de l'usure est constituée par une multitude de conducteurs électriques (122) qui sont disposés, de préférence au moins par tronçons, parallèlement à la surface (2) du palier à glissement et dans des profondeurs différentes lorsqu'on se réfère à la surface en question.

5. Plaque faisant office de capteur (1) selon l'une quelconque des revendications précédentes, **caractérisée en ce que** les paramètres a et b, avec lesquels on forme la matrice (a x b) pour l'agencement des capteurs de mesure (10), et les paramètres m et n, avec lesquels on forme la matrice (m × n) pour l'agencement des capteurs de l'usure (121), sont respectivement constitués par des valeurs correspondant à des nombres entiers d'une manière telle que l'on adapte par là l'agencement matriciel des capteurs de mesure (10), respectivement des capteurs de l'usure (121) au contour périphérique de la plaque faisant office de capteur (1).

6. Plaque faisant office de capteur (1) selon l'une quelconque des revendications précédentes, **caractérisée en ce que** les paramètres a et b, avec lesquels on forme la matrice (a x b) pour l'agencement des capteurs de mesure (10), et les paramètres m et n, avec lesquels on forme la matrice (m x n) pour l'agencement des capteurs de l'usure (121), sont respectivement constitués par des valeurs correspondant à des nombres entiers, qui sont sélectionnées à partir de la plage de nombres {1 - 100}, de préférence à partir de la plage de nombres {1 - 50}, de façon plus préférée à partir de la plage de nombres {1 - 20}, de préférence d'une manière telle que les capteurs de mesure (10), respectivement les capteurs de l'usure (121) sont disposés sous la forme d'une matrice 2 × 2, sous la forme d'une matrice 3 × 2, sous la forme d'une matrice 3 × 1, sous la forme d'une matrice 3 × 3, sous la forme d'une matrice 4 × 4, sous la forme d'une matrice 5 × 5, sous la forme d'une matrice 6 × 6, sous la forme d'une matrice 6 × 4, sous la forme d'une matrice 7 × 7, sous la forme d'une matrice 8 × 8, sous la forme d'une matrice 9 × 9, sous la forme d'une matrice 10 × 10, sous la forme d'une matrice 11 × 11, sous la forme d'une matrice 12 × 12.

7. Plaque faisant office de capteur (1) selon l'une quelconque des revendications précédentes, **caractérisée par** au moins un dispositif de stockage de données (7) qui peut être lu par une machine, dans lequel on peut mettre en mémoire des valeurs de signaux respectivement de mesure des capteurs de mesure (10).

8. Plaque faisant office de capteur (1) selon l'une quelconque des revendications précédentes, **caractérisée en ce que** l'on prévoit une unité d'émission (8) qui est mise en liaison par l'intermédiaire de signaux avec les capteurs de mesure (10), au moyen de laquelle les valeurs de mesure des capteurs de mesure (10) peuvent être transmises par l'intermédiaire d'une liaison radio ou d'une liaison filaire à un mécanisme d'évaluation (A).

9. Plaque faisant office de capteur (1) selon l'une quelconque des revendications précédentes, **caractérisée par** un support de données (9) qui comprend une caractéristique qui peut être lue par une machine, au moyen de laquelle la plaque faisant office de capteur (1) peut être identifiée de manière univoque ; de préférence d'une manière telle que le support de données (9) est constitué par un transpondeur RFID, par un élément NFC (Near-Field-Communication) et/ou par un code QR.

10. Plaque faisant office de capteur (1) selon l'une quelconque des revendications précédentes, **caractérisée en ce qu'**elle est fixée à une empoise (E) d'un cylindre d'une cage de laminoir (200).

11. Plaque faisant office de capteur (1) selon l'une quelconque des revendications 1 à 9, **caractérisée en ce qu'**elle est fixée à un montant de cage de laminoir (208) d'une cage de laminoir (200).

12. Dispositif (20) destiné à la détermination de la situation et/ou de la position d'un cylindre (202 ; 204) dans une cage de laminoir (200), qui comprend :
un mécanisme d'évaluation (A), qui est mis en liaison par l'intermédiaire de signaux avec les capteurs de mesure (10) d'une plaque faisant office de capteur (1) en conformité avec l'une quelconque des revendications 1 à 11, par l'intermédiaire duquel les valeurs de signaux des capteurs de mesure individuels (10) peuvent être reçues ; dans lequel le mécanisme d'évaluation (A) est conçu, par le biais de la mise en œuvre de programmes, d'une manière telle que, en prenant en compte un contact superficiel, linéaire ou ponctuel que l'on obtient contre la surface (2) du palier à glissement de la plaque faisant office de capteur (1) en position adjacente de laquelle est disposé un composant, on peut déterminer la position d'un cylindre auquel est attribuée cette plaque faisant office de capteur (1) et/ou l'orientation de l'axe de cylindre correspondant (206) de ce cylindre par rapport à un montant de cage de laminoir qui lui est associé (208) d'une cage de laminoir (200) et/ou au moins d'un autre cylindre (202 ; 204) dans la même cage de laminoir (200) et/ou au moins d'un autre cylindre dans le même train de laminoir.

13. Dispositif (20) selon la revendication 12, **caractérisé par** un système central (Z) qui est mis en liaison par l'intermédiaire de signaux avec le mécanisme d'évaluation (A), qui comprend une unité de mise en mémoire (5) et une unité d'évaluation (6) ; dans lequel les données du mécanisme d'évaluation (A) peuvent être transmises, par l'intermédiaire d'un tronçon de signalisation (S) au système central (Z) et peuvent y être évaluées ; de préférence d'une manière telle que le mécanisme d'évaluation (A) est équipé d'un module de mise en communication (K) avec lequel, pour le mécanisme d'évaluation (A), un échange de données est possible avec le système central (Z) et/ou avec des partenaires de communication externes.

14. Dispositif (20) selon la revendication 13, **caractérisé en ce que** l'unité d'évaluation (6) du système central (Z) est conçue, par le biais de la mise en oeuvre de programmes, d'une manière telle que l'on peut déterminer la situation de tous les axes de cylindres (206) dans un train de laminoir et les mettre en relation les unes avec les autres, respectivement les comparer les unes aux autres ; de préférence d'une manière telle que l'on peut générer un signal d'avertissement au moyen de l'unité d'évaluation (6), dans le cas où l'orientation, respectivement la situation des axes de cylindres (206) s'écartent de valeurs de mesures qui ont été déterminées au préalable.

15. Dispositif (20) selon l'une quelconque des revendications 12 à 14, pour autant que, avec le dispositif en question, les valeurs de signaux des capteurs de l'usure (121) d'une plaque faisant office de capteur (1) puissent être reçus également en conformité avec la revendication 4, dans lequel le mécanisme d'évaluation (A) est conçu, par le biais de la mise en œuvre de programmes, d'une manière telle que l'on peut enregistrer de cette manière une modification, en particulier une élévation de la valeur de résistance ohmique du conducteur électrique (122) d'un capteur de l'usure déterminé (121) en fonction de son enlèvement de matière propre, dans le but de garantir de cette façon une déduction de la modification reconnue de la valeur de résistance en ce qui concerne la dimension de l'enlèvement de matière à la surface (2) du palier à glissement et/ou en ce qui concerne l'épaisseur résiduelle de la surface (2) du palier à glissement à l'endroit occupé par ce capteur de l'usure déterminé (121).

16. Dispositif (20) selon l'une quelconque des revendications 12 à 15, **caractérisé en ce que** le mécanisme d'évaluation (A) est équipé d'une source d'énergie (128) ; dans lequel le mécanisme d'évaluation (A) est relié au moins aux capteurs et en particulier aux capteurs de l'usure (121) d'une manière telle que les capteurs de l'usure (121) sont alimentés en énergie par l'intermédiaire de la source d'énergie (128) ; de préférence d'une manière telle que la source d'énergie (128) alimente en énergie des composants électriques supplémentaires (7 ; 8 ; 9) qui sont prévus contre la plaque faisant office de capteur (1) selon l'une quelconque des revendications 7 à 9 ou qui y sont appliqués.

17. Dispositif (20) selon la revendication 16, **caractérisé en ce que** la source d'énergie (128) est réalisée sous la forme d'une unité de récupération de l'énergie; de préférence, **en ce que** l'unité de récupération de l'énergie acquiert de l'énergie par voie thermique et/ou par voie mécanique.

18. Procédé destiné à la détermination de la situation et/ou de la position d'au moins un cylindre dans une cage de laminoir (200) au cours de la mise en service de cette dernière, dans lequel on met en oeuvre un mécanisme d'évaluation (A) qui est mis en liaison par l'intermédiaire de signaux avec les capteurs de mesure (10) d'une plaque faisant office de capteur (1) en conformité avec l'une quelconque des revendications 1 à 11, qui comprend les étapes consistant à :
(i) recevoir les valeurs de mesure des capteurs de mesure (10) d'une plaque faisant office de capteur (1) selon la revendication 10 et/ou d'une plaque faisant office de capteur (1) selon la revendication 11, par l'intermédiaire du mécanisme d'évaluation (A) ;
(ii) mettre en œuvre l'étape (i) pour toutes les plaques faisant office de capteur (1) qui sont appliquées contre les empoises (E) de cylindres dans la cage de laminoir (200) et/ou contre les montants de cage (208) de la cage de laminoir (200) et/ou contre au moins un autre cylindre du même train de laminoir ; et
(iii) évaluer toutes les valeurs de signaux de l'étape (ii) d'une manière telle que, en prenant en compte un contact superficiel, linéaire ou ponctuel que l'on obtient contre la surface (2) du palier à glissement des plaques faisant office de capteurs (1) qui sont attribuées à un cylindre déterminé (202 ; 204) dans un montant de cage de laminoir déterminé (208), en position adjacente duquel est disposé un composant, on détermine la position de ce cylindre déterminé (202 ; 204) et/ou l'orientation de l'axe de cylindre correspondant (206) de ce cylindre déterminé par rapport à un montant de cage de laminoir qui lui est associé (208) d'une cage de laminoir (200) et/ou au moins d'un autre cylindre dans la même cage de laminoir (200) et/ou au moins d'un autre cylindre dans le même train de laminoir.

19. Procédé selon la revendication 18, **caractérisé en ce que**, à l'étape (iii), on évalue les valeurs de signaux de toutes les plaques faisant office de capteurs (1) pour un montant de cage de laminoir déterminé (208), d'une manière telle que l'on connaît la situation de tous les axes de cylindres (206) dans ce montant de cage de laminoir déterminé (208).

20. Procédé selon la revendication 18 ou 19, **caractérisé en ce que**, dans le cadre de l'évaluation de l'étape (iii), on procède à une évaluation des valeurs de signaux de deux cylindres voisins, en particulier de deux cylindres de travail voisins (202) et/ou d'un cylindre de soutien (204) et d'un cylindre de travail (204) qui lui est adjacent, d'une cage de laminoir (200), et/ou de respectivement de deux paires de cylindres voisines l'une de l'autre et/ou d'un jeu de cylindres de travail et de soutien et/ou d'un jeu de cylindres de travail, de cylindres intermédiaires et de cylindres de soutien, afin de savoir si les axes (208) de ces cylindres (202 ; 204) sont orientés parallèlement les uns aux autres ou si un angle (α) est inclus entre eux ; de préférence, **en ce que**, dans le cadre de l'évaluation de l'étape (iii) de la revendication 18, on met en relation réciproque la situation, respectivement la position de tous les axes de cylindres dans un train de laminoir.

21. Procédé selon l'une quelconque des revendications 18 à 20, **caractérisé en ce que** l'on met en oeuvre en l'occurrence un dispositif (20) en conformité avec l'une quelconque des revendications 12 à 17.

22. Procédé destiné à la mesure d'un état d'usure d'éléments de guidage ou d'éléments sous la forme de paliers à glissement au cours de la mise en service d'une cage de laminoir (200), dans lequel on met en œuvre un dispositif (20) selon la revendication 15, qui comprend les étapes dans lesquelles :
(i) on détermine un état d'usure en ce qui concerne une plaque faisant office de capteur (1) selon la revendication 10 et une géométrie (topographie) en vigueur de la surface associée du palier à glissement (2) ;
(ii) on détermine un état d'usure en en ce qui concerne une plaque faisant office de capteur (1) selon la revendication 11 et une géométrie (topographie) en vigueur de la surface associée du palier à glissement (2) ;
(iii) on met en oeuvre les étapes (i) et (ii) pour toutes les plaques faisant office de capteurs (1) qui sont appliquées contre les empoises (E) de cylindres et contre les montants de cages de laminoirs (208) de la cage de laminoir (200) ; et
(iv) on transmet les valeurs de mesure de l'étape (iii) à un système central (Z) qui comprend une unité de mise en mémoire et d'évaluation (6) ; dans lequel ces valeurs de mesure sont attribuées respectivement à un jeu de cylindres déterminé (212) qui est constitué par un cylindre déterminé, par les empoises (E) qui sont prévues pour ce dernier, ainsi que par la plaque faisant office de capteur (1) selon la revendication 10, qui y est appliquée, ainsi qu'à un montant de cage de laminoir déterminé (208) de la cage de laminoir (200), qui comprend une plaque faisant office de capteur (1) selon la revendication 11.

23. Procédé selon la revendication 22, **caractérisé en ce que** l'on met en oeuvre l'étape (iv) avant la mise à l'arrêt de la mise en service de la cage de laminoir (200) à des fins de préparation d'une adaptation.

24. Procédé selon la revendication 22 ou 23, **caractérisé en ce que** l'on compare l'état d'usure en vigueur, respectivement la topographie en vigueur de plaques faisant office de capteurs (1) pour un accouplement d'un jeu de cylindres déterminé (212) et d'un montant de cage de laminoir déterminé (208) à une première valeur limite qui a été déterminée au préalable ; dans lequel, dans le cas d'un dépassement vers le haut de cette première valeur limite qui a été déterminée au préalable, on déclenche au moins un signal d'avertissement pour une demande de vérification de la cage de laminoir (200) ; de préférence **en ce que**, dans le cas d'un dépassement vers le haut d'une deuxième valeur limite qui a été déterminée au préalable, on déclenche un signal d'avertissement pour un arrêt de la mise en service de la cage de laminoir (200).

25. Procédé destiné à la planification d'une production pour au moins une cage de laminoir (200) ou pour une multitude de cages de laminoir (200) en particulier sous la forme de cages de laminoirs destinées à la production de tôles épaisses, sous la forme de cages de laminoirs du type à cylindres multiples ou sous la forme d'un train de laminoir destiné à un laminage à chaud ou à un laminage à froid, qui comprend les étapes dans lesquelles :
(i) on met à disposition des valeurs de mesure en ce qui concerne l'état d'usure de plaques faisant office de capteurs (1) selon l'une quelconque des revendications 1 à 11 et en qui concerne la topographie qui en résulte à l'endroit occupé par les surfaces (2) de leurs paliers à glissement, les valeurs de mesure en question étant attribuées à des jeux de cylindres déterminés (212) et à des montants de cages de laminoirs déterminés (208) d'un train de laminoir et ayant été mises en mémoire dans l'unité de mémoire (5) d'un système central (Z), en particulier avec le procédé selon la revendication 20, par l'intermédiaire d'une unité d'évaluation (6) du système central (Z) ;
(ii) on extrait par lecture les valeurs de mesure de l'étape (i) en faisant appel à une unité d'évaluation (6) du système central (Z) ;
(iii) on compare la topographie, respectivement la géométrie en vigueur des surfaces de paliers à glissement (2) d'une part de jeux de cylindres déterminés et d'autre part de montants de cages de laminoirs déterminés (208) d'une cage de laminoir (200) ; et
(iv) on attribue un jeu de cylindres déterminé (212) qui est constitué en particulier par un cylindre (202 ; 204), par les empoises (E) qui sont prévues pour ce dernier, ainsi que par les plaques faisant office de capteurs (1) qui y sont appliquées, à un montant de cage de laminoir déterminé (208) en fonction des nouvelles conditions de production planifiées et en fonction du fait que l'on a constaté, à l'étape (iii), une concordance de la topographie des surfaces (2) de paliers à glissement, d'une part de la plaque faisant office de capteur (1) d'une empoise (E) déterminée et d'autre part d'un montant de cage de laminoir déterminé (208) d'un train de laminoir.
